# EUROPEAN PATENT SPECIFICATION

(11) **EP 3 112 115 B1**
(45) Date of publication and mention of the grant of the patent: **15.08.2018**
(21) Application number: 16172484.4
(22) Date of filing: 01.06.2016
(51) Int. Cl.: B29C 33/20, B29C 33/36, B29C 33/26

(54) **METHOD AND APPARATUS FOR CONVEYING AND FOAMING OBJECTS**
VERFAHREN UND VORRICHTUNG ZUM FÖRDERN UND AUFSCHÄUMEN VON OBJEKTEN
PROCÉDÉ ET APPAREIL POUR LE TRANSPORT ET LE MOUSSAGE DES OBJETS

(30) Priority: 26.06.2015 IT UB20151697
(43) Date of publication of application: 04.01.2017
(73) Proprietor: Cannon S.p.A., 20121 Milan (IT)
(72) Inventor: Corti, Maurizio, 20121 Milan (IT); Pobbiati, Fabrizio, 20121 Milan (IT)
(74) Representative: Candito, Rocco

(56) References cited:
- DE-A1-102007 037 072
- JP-A- 2006 150 907
- US-A- 2 755 505

## Description

### BACKGROUND OF THE INVENTION

This invention relates to a method and an apparatus for foaming and conveying objects, such as door for a refrigerator, cushions or parts of seat of motor vehicles, walls for a display bench, parts of walls or insulating coatings for a building or the like, and, in general, panels or objects, mostly substantially two-dimensional, i.e. having two prevalent dimensions compared with a third dimension, and provided with outer coating elements, such as half shells or shaped panels made of plastics, metal, or slabs or flat, curved or fretted sheets between which coating elements a thermally insulating intermediate layer made of polyurethane or phenol material has to be interposed.

### PRIOR ART

Currently, the production of doors for domestic, commercial and industrial refrigerators is possible through two different known basic technologies for conveying and maintaining doors in respective moulds during the production cycle.

A first basic technology provides a foaming process and is based on conveying doors by means of a plant that provides a drum carousel that is rotatable around a horizontal axis.

On the drum carousel, that is rotatable around a horizontal rotation axis, mould-holding presses are housed, generally from three to twelve in number, each of which comprises two flat containing and pressing surfaces stiffened by a rather tough structure so as not to be deformed under the force of pressure of the expanding foam to the surfaces of which the respective lower and upper half moulds are connected that contain the respective half shells or shaped panels intended for defining the outer face and the inner face of the door with respect to the refrigerator chamber to which the door has to be fitted. A mould-holding press is provided for each pair of coupled half moulds. The mould-holding presses are then mounted on the drum carousel, and are rotated integrally therewith.

Once the half-shells have been loaded on the respective half moulds, the latter are closed together and kept clamped by the aforesaid presses. The drum carousel rotates in an indexed manner, stopping each time in a stationary position, to perform various operations, such as extracting moulded doors, cleaning and loading the two half moulds, and dispensing the mixture. During the dispensing step, if the mould is closed before injection, a mixing head is brought near and is inserted, by means of a hole obtained in the side of the mould, to inject, inside the cavity defined by the half-shells, the polyurethane mixture intended to constitute the intermediate layer of insulating material of the door.

When, on the other hand, an open mould procedure is followed, the head is translated above one of the half shells, normally the one that defines the inner face of the door, housed in the lower half mould, and, during translation the polyurethane foam is poured. Immediately after dispensing, the two half-shells are closed by the press.

It is necessary to maintain the doors in the correct position forcibly whilst the foam, expanding, fills the respective cavities bounded by the half-shells of the doors since such foam exerts great pressure that may reach values of 6 - 8 Newton per square centimetre.

After the polyurethane mixture has been injected and has expanded, the foam polymerisation step occurs whilst the drum carousel rotates by further indexed amounts.

The considerable pressure values to be withstood require rather tough press structures to be adopted. This structural complexity entails, from the dynamic point of view, significant inertia mass that imposes functional and productive limits on the entire plant.

Owing to the discontinuous operation in an indexed manner, which entails rotation with frequent stops and restarts, then accelerations and mechanical stress, it is necessary to operate, as a precaution, at low accelerations and process speeds, with resulting impacts on productive capacity.

Further, the operations performed by the operator to unload the foamed doors to clean the half moulds and load the half-shells are necessarily in sequence with the drum rotation and thus increase the step time.

In order to remove a foamed door and subsequently load a new door to be foamed, the operator requires about 20-30 seconds, and also considering foaming, closing and advancing one step, a total of 40 to 60 seconds are required whereas for polymerisation 3 to 4 minutes are required for each door being processed.

This plant, above all because of the multiplicity of presses and relative drive devices on the drum carousel, is very complex from the structural and functional point of view and permits foaming operations only in a time sequence after the removal of the foamed door and insertion of the two half-shells, thus requiring the time necessary for these operating steps.

Further, the possible need to maintain or replace the moulds involves stopping the entire drum carousel, which has undesired significant machine downtime.

A second technology for producing refrigerators doors and the like, which provides a foaming process with both open and closed mould, is based on a conveyor plant provided with a dual-chain conveyor device known as a "paternoster".

The dragging device of the conveyor is formed by two parallel chains and is conformed to support and drag constrained by the chains a plurality of mould holders, that are variable in number, for example from 8 to 40 mould holders, in which each mould holder can contain a pair of half moulds for foaming just one door or just one set of doors for a single refrigerator.

It is necessary for the mould holders to be maintained on horizontal planes. This occurs through suitable coupling of the chain elements with respective drive sprockets. To run the various steps of extracting the foamed door, inserting new half shells to be foamed, etc., normally at least two operators are necessary, but in some cases, even five are required. In the "paternoster" plant, owing to the particular and complex structural configuration, it is rather difficult to ensure that a part of the double-chain structure traverses internally a tunnel-kiln for heating that is necessary for facilitating the polymerisation process of the polyurethane mixture and shape-stabilisation.

In order to meet the set standard requirements required by refrigerator manufacturers, it is necessary that no geometric distortions occur on the foamed doors beyond a certain acceptability threshold and to do so in the case of a double-chain plant, with sufficiently tough moulds and mould holders that are made of metals with considerable thicknesses are resorted, in order to be able to withstand independently the thrusts that are generated in several directions in each door during the foaming step, or, in the case of the drum plant, tough presses are resorted to that are also heavy and structurally complex. All this is naturally reflects in great weights and inertia, which inevitably also affect the speed and thus productivity of such plants.

Further, also in this type of plant, which is rather expensive, in the event of maintenance or replacement of the moulds it is necessary to stop the entire production line, with clear economic losses.

The use of a so-called "carousel" plant is also known that defines a closed horizontal path along which a plurality of moulds is advanced. Each mould consists of a lower half mould and an upper half mould, which are hinged together along one side.

The upper half moulds are mechanically connected to guides, which are suitably shaped along a cam profile: in this manner, during advancement, the upper half moulds receive from the aforesaid guides an opening movement at an operating zone in which the operations are possible of extracting objects that have just been moulded, cleaning and loading of new half shells, dispensing and subsequent closing of moulds. The moulds move simultaneously, as they all share the same common dragging device.

Although this type of plant can operate continuously, very low advancement speeds are necessary, because of the structural complexity and in particular the mechanical coupling between the moulds and the guides and/or parts of the dragging device. Also in this case, the possible need to intervene to maintain or to replace one or more moulds makes necessary the arrest of the entire plant, with resulting machine downtime and productivity losses.

A moulding plant is known from US2755505.

### OBJECTS OF THE INVENTION

One object of the invention is to simplify both structurally and functionally the plants for foaming doors, in particular refrigerator doors, or more in general substantially two-dimensional objects to improve the versatility and productivity of such plants. In particular, it would be desirable to provide a method and an apparatus that is able to meet the requirement that currently, in the production of refrigerators, is constantly increasing and imposes a diversification of the various models, with a variation of the aesthetic appearance and geometric shape, dimensions, combination between lower and upper doors, and respective cupboards. One object is thus to permit great versatility, making possible to insert, in real time without having to stop the production cycle, innumerable geometrical configurations of the containing moulds dedicated to the manufacture of different geometrical shapes of door, thus meeting the need to produce the different forms according to the "just in time" method, i.e. making the combination of doors available for the specific model of refrigerator that is on the production line together with many other models to meet the sequence of orders coming from the market. This is useful for avoiding accumulating stocks of single models in the warehouse. Therefore it is desired to provide a solution that enables in the increasingly great number of geometrical shapes of door that to be managed in a flexible and optimised manner that are often different from one another on the same production line and to obtain simultaneously high plant productivity, thus also improving the localisation and separation of the automatic transfer and opening/closing operations with respect to the operator access zones, with a maximum reduction of undesired downtime to permit the door model change required during sequential production of doors.

### SHORT DESCRIPTION OF THE INVENTION

These and other objects and advantages of the invention are achievable by a method according to what is defined in claim 1 and by means of an apparatus according to what is defined in claim 12.

The method and the apparatus according to the invention enable the previously mentioned objects to be achieved; further, owing to the modular structure that can be amplified by inserting an additional desired number of modules, the apparatus according to the invention is able to adapt with great flexibility to the available spaces, limiting to the maximum general overall dimensions, ensuring at the same time high productive capacity and facilitating access to a robot or an operator for loading/unloading operations.

In particular, owing to the presence of distinct and separate conveying modules, which are drivable independently of one another, combined with a transfer-closing carousel unit and with an opening-transfer carousel unit that is able to perform several operations simultaneously (opening/closing and transfer of the moulding units), in a synergic manner a significant general reduction of production time is obtained, in addition to the possibility of varying in real time the type of objects to be foamed without undesired downtime.

In the following description, for the sake of simplicity, reference will be made to the terms "first moulding element" and "second moulding element", to indicate the two couplable parts that define a single entire "moulding unit". In turn, the first and second moulding elements can be understood to be containing elements conformed for housing respective opposite half-shells intended for generating the faces of a door or another object. In another possible embodiment, the first and second moulding element can be understood to be true "half moulds" conformed for receiving directly the reactive chemical mixture, for foaming objects devoid of outer half shells, such as cushions, head rests or parts of seats for motor vehicles or the like. It is further to be borne in mind that first or second moulding element can be understood to be the only mould or containing element of the half-shells, or, the whole can be deemed to be defined by this mould or containing element hooked to a respective reinforcing superstructure or platform or reinforcing pallet. The two mould or containing elements, together with the two respective reinforcing structures, make up an entire moulding unit, or foaming unit.

Further features and advantages will be clear from the appended claims, from the figures and from the following description.

### SHORT DESCRIPTION OF THE DRAWINGS

The invention can be better understood and implemented with reference to the attached drawings that illustrate an embodiment thereof by way of non-limiting example, in which:

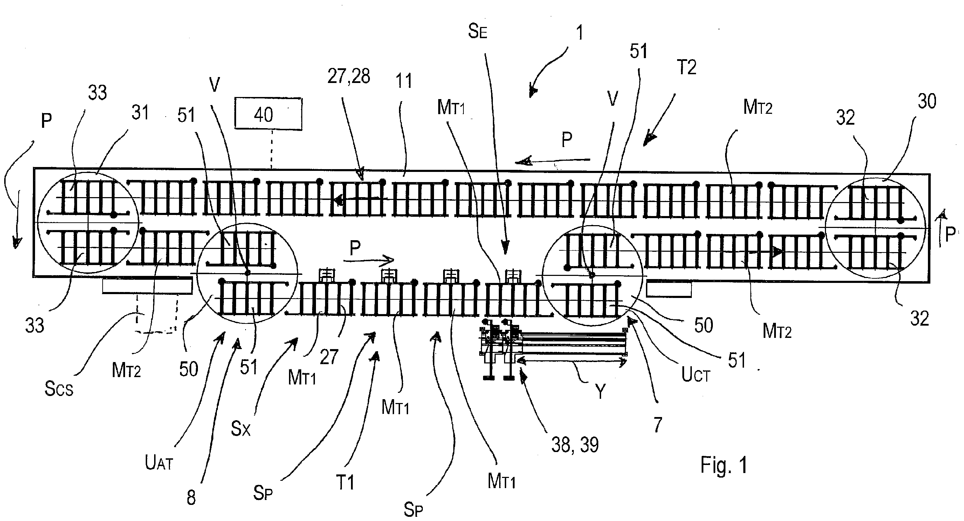

Figure 1 shows schematically from above an apparatus according to the invention for foaming, by moulding units, objects, such as doors for refrigerators;

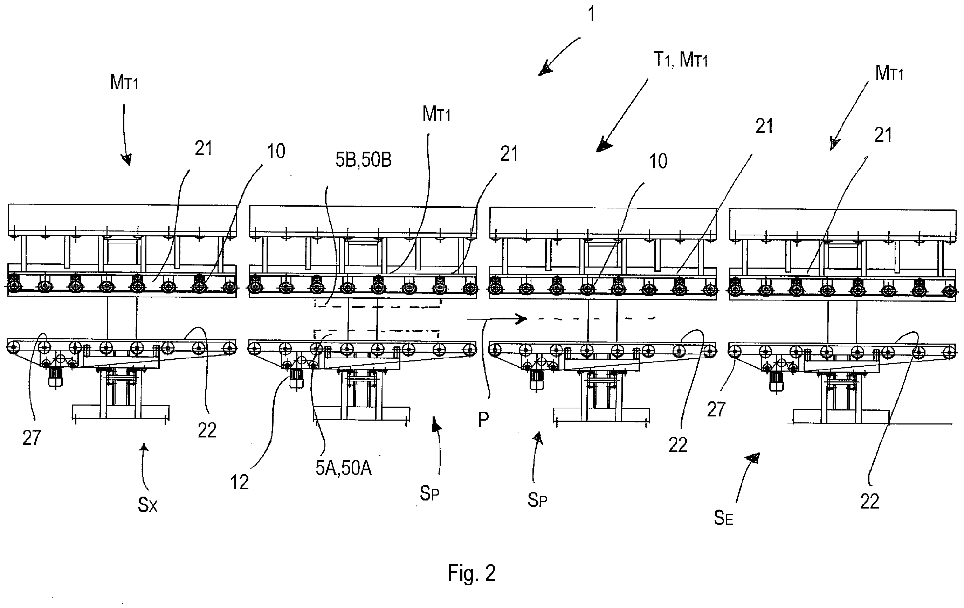

Figure 2 is a section, taken along a vertical longitudinal plane, of a part of the apparatus of Figure 1, wherein the inner parts of the apparatus are more visible; in particular a plurality of operating modules is visible that is placed in sequence to define a first portion of path for the moulding units in which the operations occur of extracting moulded objects and preparing new foaming cycles;

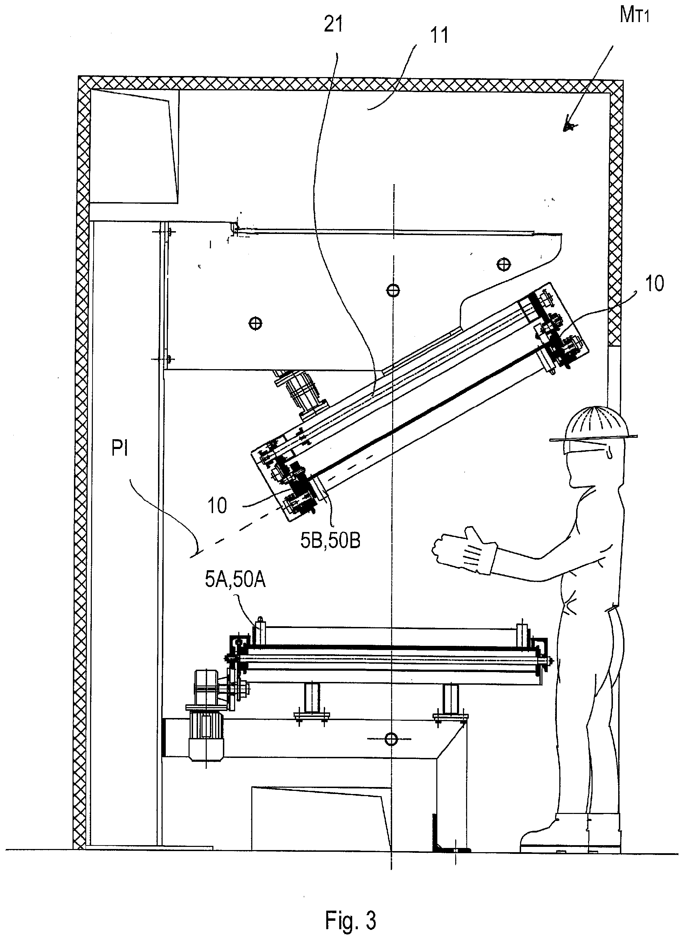

Figure 3 is a cross section of the apparatus in the first portion of path shown in Figure 2;

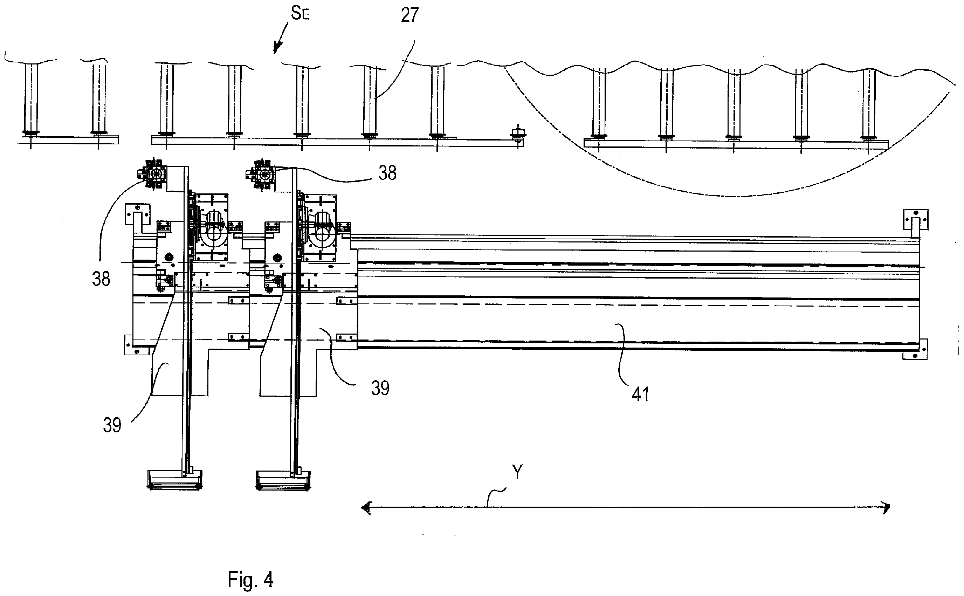

Figure 4 shows in greater detail a part of the apparatus in which a dispensing station with several movable mixing heads is visible;
Figure 5 is a side view of the apparatus, in which conveying modules, an opening-transfer carousel unit, and a dispensing station are visible;
Figure 6 is a schematic section and fragmentary view of a refrigerator door obtainable by the method and the apparatus according to the invention, in which the two coating elements or half-shells are visible, between which coating elements a thermally insulating layer made of polyurethane or phenol material is interposed;

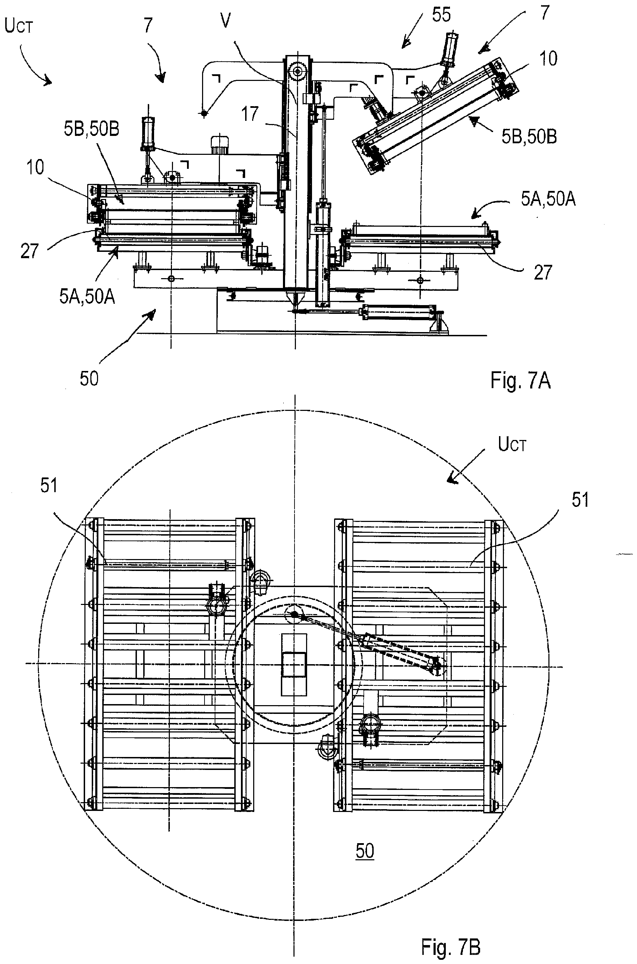

Figure 7A shows a transfer-closing carousel unit included in the apparatus;

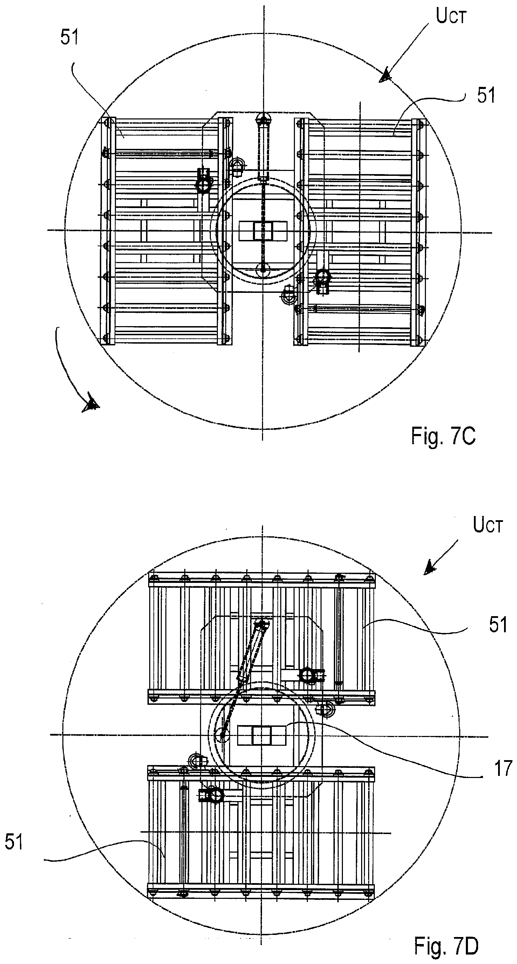

Figures 7B, 7C, and 7D show, from above, the transfer-closing carousel unit in different operating positions;

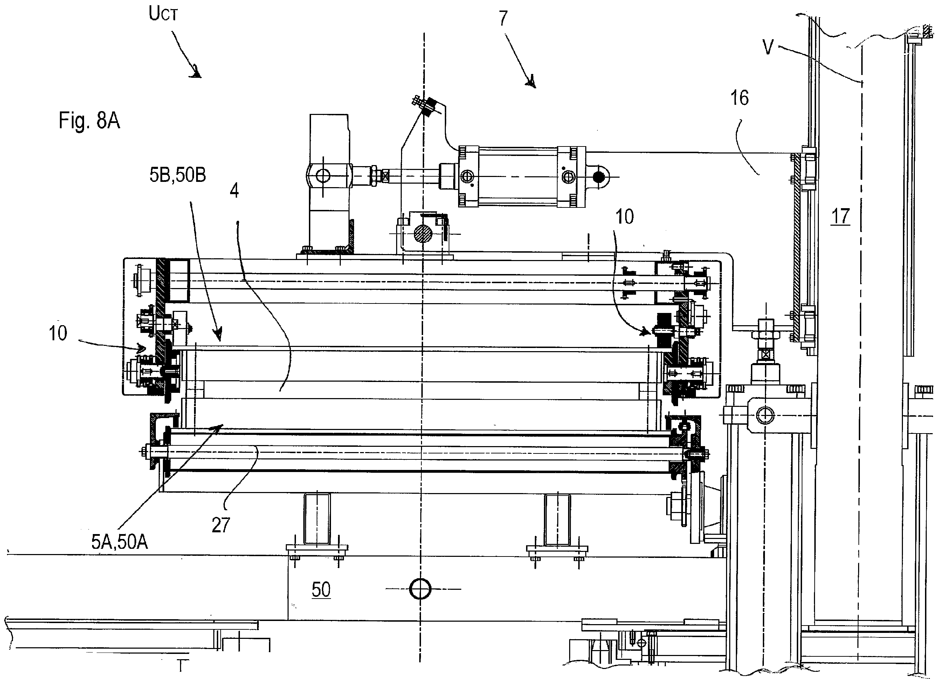

Figure 8A shows in greater detail one of the movement devices included in the transfer-closing carousel unit, engaging with a respective moulding unit in a closed configuration;

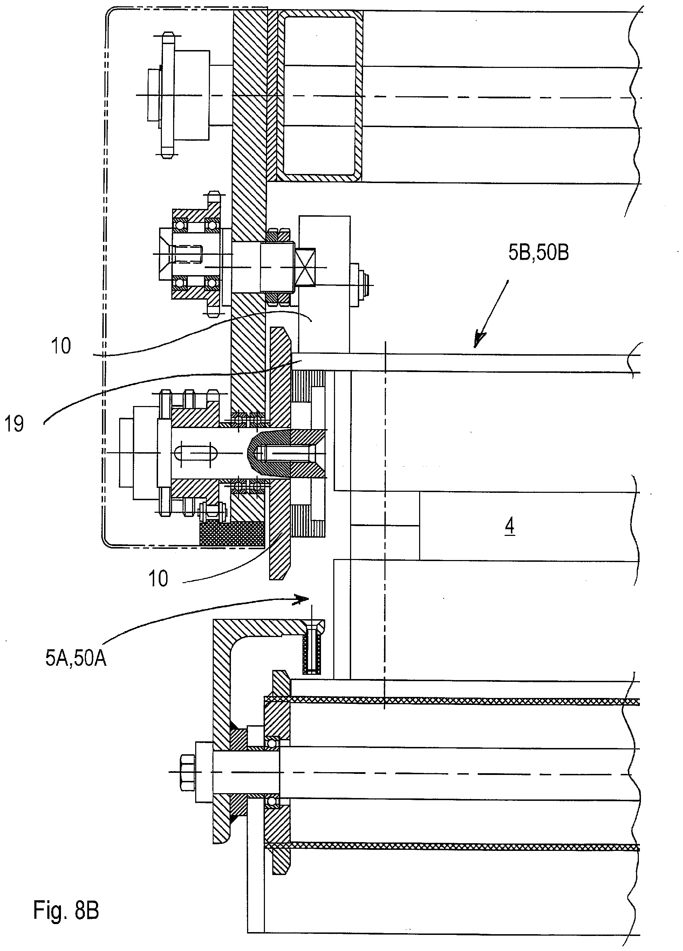

Figure 8B is an enlarged detail of Figure 7;

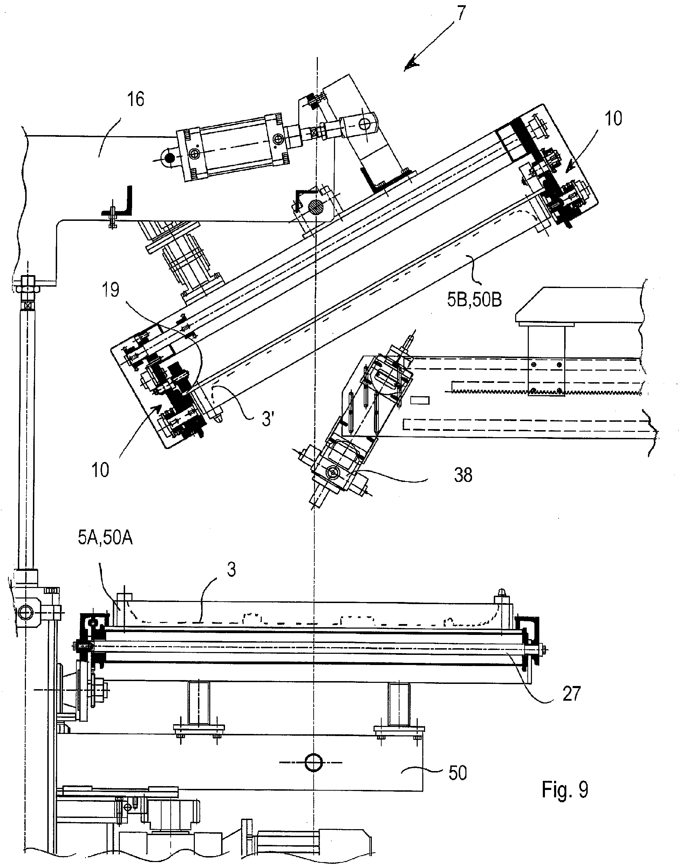

Figure 9 shows in greater detail the other movement device of the transfer-closing carousel, engaging with a respective moulding unit in an open configuration;

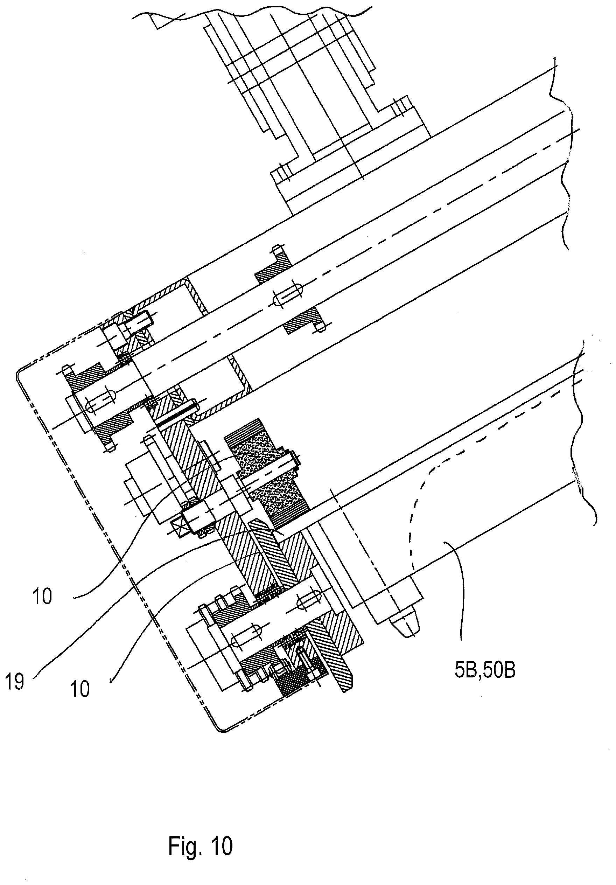

Figure 10 is an enlarged detail of Figure 9;

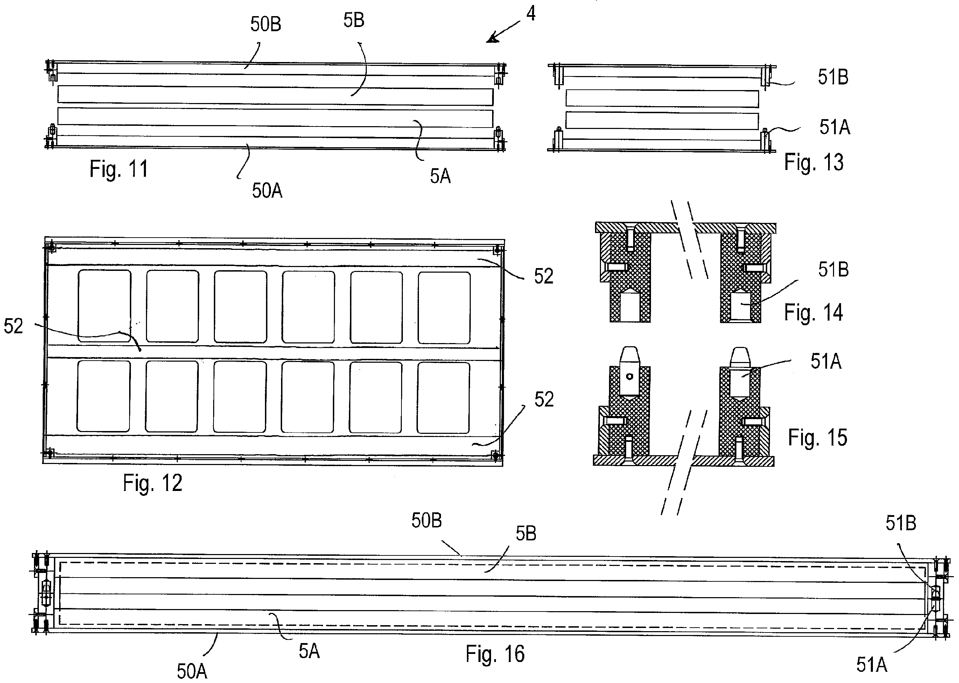

Figure 11 shows schematically a moulding unit (that includes both the two moulding elements and the respective pallets or upper and lower reinforcing superstructures;
Figures 12 and 13 show respectively top and side views of the moulding unit, provided with reinforcing superstructures, which is shown in Figure 11;
Figures 14 and 15 are enlarged details of centring and coupling elements provided on the superstructures of the moulding unit;
Figure 16 shows a moulding unit (with reinforcing superstructures) in a closed configuration.

### DETAILED DESCRIPTION OF THE INVENTION

With reference to the enclosed Figures, an apparatus 1 is shown for conveying and foaming objects 2, such as doors for a refrigerator, cushions, arm rest or other parts of motor vehicles, walls for a display bench, lid doors for freezer chests, parts of walls or insulating coatings for a building or the like, doors and windows for houses and buildings, and, in general, panels or objects, mostly substantially two-dimensional, i.e. having two prevalent dimensions compared with a third dimension, and provided with outer coating elements, such as half-shells or shaped panels made of plastics, metals, or slabs or flat, curved or fretted sheets, between which coating elements a thermally insulating intermediate layer made of polyurethane or phenol material has to be interposed.

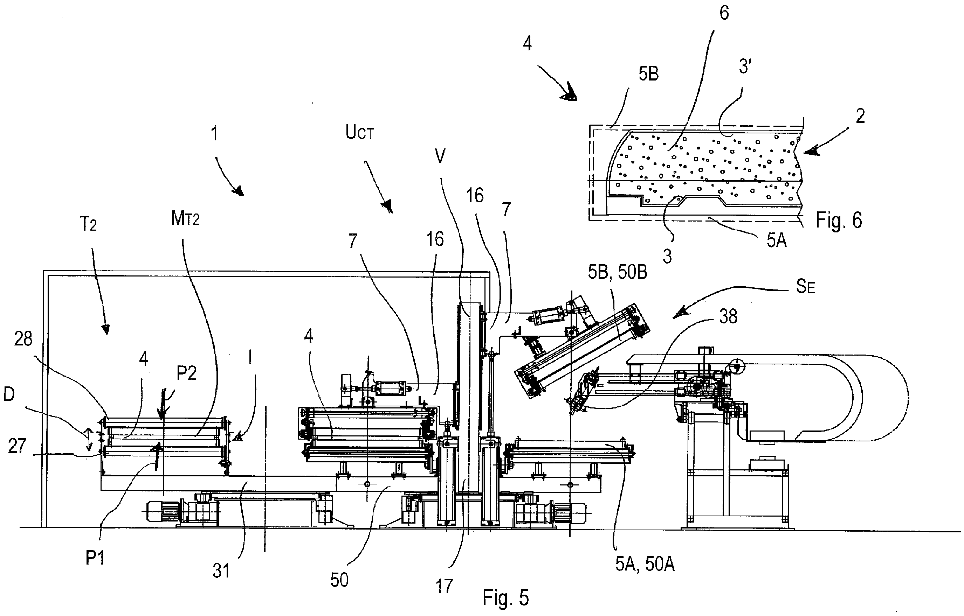

As shown in Figure 6, the coating elements 3, 3' to which reference is made can be of the shell or shaped panel type or of the flat, curved or shaped sheet or slab type for thermoforming. In particular, the refrigerator doors 2 can have an outer half-shell 3' made of sheet metal, intended to define the outer face during normal use of the door, and an inner half shell 3 made of thermoformed thermoplastic material intended to define the inner face of the door with respect to the space of the refrigerator associated therewith.

The two half-shells are coupled to form a hollow box possibly provided on the perimeter with a gaskets, and between which foaming occurs to generate the intermediate layer 6 made of thermally insulating polyurethane or phenol material.

The two half-shells are housed in respective first 5A and second 5B moulding elements that together define a respective moulding unit 4. The moulding unit 4, in particular but in a non-limiting manner, includes the reinforcing superstructures 50A, 50B that are couplable together to contain the deformation arising from the expansion pressure of the foam, as disclosed better above. The reinforcing superstructures 50A, 50B include the centring and coupling elements 51A, 51B (male elements and female elements). The centring and coupling elements 51A, 51B, for example of the taper pin (male element) type that engages a respective recess (female element) ensure correct positioning and mutual coupling of the reinforcing superstructures 50A, 50B.

The two reinforcing structures or platforms 50A, 50B, or pallets enable the respective pair of half moulds 5A, 5B to be moved/transferred.

The apparatus 1 comprises a plurality of mutually distinct and separate conveying modules M_{T1}, M_{T2} for advancing the moulding units 4 along an advancement path (P) along which a foaming cycle occurs. Each of the conveying modules M_{T1}, M_{T2} has a drive motor 12 means to be driven independently of the other operating modules.

It is possible to combine a desired number of conveying modules M_{T1}, M_{T2} according to a desired spatial sequence such as to make up a modular structure of the desired length and shape. In this manner it is possible to define an advancement path P that is better adapted to specific process parameters, to features of the chemically reactive mixture used and to the features of the objects 2 to be made.

The apparatus 1 comprises a first series of conveying modules M_{T1} arranged in succession for defining a first portion T1 of the path P and configured for advancing along such first portion T1 the moulding units 4 in the open position.

The conveying modules M_{T1} of the first series define a station S_{X} for extracting moulded objects 2, one or more stations Sp for preparing/loading moulding units 4 for the subsequent foaming cycles of further objects 2, and a station S_{E} for dispensing the chemically reactive mixture on the first moulding element 5A of each moulding unit 4 in the open position.

Each conveying module M_{T1} of the first portion T1 of path P comprises a lower resting and advancement plane 22 for the first moulding elements 5A. The lower resting and advancement planes 22 are defined by rolling means 27 that includes a plurality of rollers distributed and mounted on suitable supports, so as to define flat roller cages.

The rollers 27 are drivable by a single shared transmission-motion element of the bevel gear belt or chain type or equivalent means.

Each conveying module M_{T1} of the first portion T1 of path P comprises an upper retaining and advancement unit 21, arranged for retaining and advancing the second moulding elements 5B parallel to and at a greater height than the first moulding elements 5A which are on the other hand advanced by lower roller planes 22.

Each upper retaining and advancement unit 21 is provided with pairs of rotating means, in particular with pairs of disc or wheel elements 10 that engage with perimeter protrusions 19 provided on the second moulding elements 5B for retaining and advancing the latter. The upper retaining and advancement units 21 are configured for tilting the second moulding elements 5B according to tilted planes PI such as to orient the second moulding elements 5B to operator/robot to facilitate the operations of extraction, cleaning and possible loading of respective coating elements 3,3'.

The apparatus 1 further comprises one or two mixing heads 38 configured for following and dispensing on each first advancing moulding element 5A, 50A a quantity of chemically reactive mixture. The mixing heads 38 are supported by slide means 39 that is alternatively movable on a guide 41 along an operating stroke Y that extends near a downstream part of the first portion T1 of path P as far as it includes a zone located on transfer-closing carousel unit U_{CT}, disclosed better below.

The mixing heads 38 are driven independently of one another to deposit in an optimum manner the chemically reactive mixture on the various zones inside the moulding half cavity. In the case of moulding of a set of doors, i.e. with several distinct moulding cavities provided on the single mould element 5A 50A, each mixing head 38 can be dedicated to filling a respective specific moulding cavity.

The apparatus 1 comprises a second series of conveying modules M_{T2} arranged in succession for defining a second portion T2 of the path P that is followed by the moulding units 4. The conveying modules M_{T2} are configured for advancing the moulding units 4 in a closed position along the second portion T2, to permit the polymerisation and shape-stabilisation process of the objects 2 contained in the respective moulding units 4.

Each of these conveying modules M_{T2} comprises first lower rolling means 27 and second upper rolling means 28 for clamping and conveying the moulding units 4 along the second portion T2 of path P. The first rolling means 27 and the second rolling means 28 are positionable at a desired reciprocal operating distance D for defining a gap I for the advancement and clamping of said moulding units 4. The first rolling means 27 and the second rolling means 28 comprise in particular first rollers 27 and second rollers 28, configured for exerting on each moulding unit 4, on opposite sides, opposing and uniformly distributed pressure actions PI, P2 so as to maintain reciprocally closed and clamped the respective first 5A, 50A and second 5B, 50B moulding elements and contrast the thrusts exerted by the expanding foam. The first rollers 27 and the second rollers 28 of each conveying module M_{T2} are drivable by a single shared transmission-motion element of the belt or chain type, that winds according to a zigzag path alternatively first on one roller of a series and subsequently on a corresponding joined roller of the other series of presser rollers, or by a bevel gear mechanism or equivalent means.

On the outer surfaces of the reinforcing superstructures 50A, 50B preferential wear tracks 52 can be obtained that are intended to come into contact with corresponding circles of the presser rollers 27, 28 from which they receive the clamping pressures. Owing to this configuration, structurally lighter half moulds can be provided, that are made for example of aluminium, or resin reinforced by fibre or microspheres or solid loads to be associated with the aforesaid respective reinforcing superstructures 50A, 50B that on the other hand take on the task of successfully bearing the pressure loads exerted by the presser rollers.

Owing to the configuration of the conveying modules M_{T2}, of the second portion T2, firm closing and clamping of the moulding elements in reciprocal contact is guaranteed without the use of chains or other uncomfortable clamping elements that are normally coupled. The firm closing and clamping condition is obtained by applying opposing pressure actions that are exertables by the presser rollers that come into contact on opposite sides on each moulding unit consisting of the two half moulds with the possible respective reinforcing superstructures. In this manner, the half moulds can have a simpler and lighter structure (that is thus also cheaper and quicker to manufacture, to open/close/move), as the contrasting function of the thrusts of the expanding foam is performed fully by the presser rollers.

The apparatus 1 comprises a heating chamber 11 that encloses at least the conveying modules M_{T2} of the second portion T2 and is used to heat each moulding unit 4 to promote the process of expansion and reaction of the foam.

The apparatus 1 comprises, downstream of the first portion T1 of path P, a transfer-closing rotatable carousel unit U_{CT} that is configured for closing and simultaneously transferring the moulding units 4 from the first portion T1 of path P to the second portion T2 of path P. The transfer-closing carousel unit U_{CT} is provided with a pair of diametrically opposite movement devices 7, which are alternatively drivable in a manner synchronised with the arrival in sequence of the open moulding units 4. The transfer-closing carousel unit U_{CT} comprises a platform 50 that is rotatable around a respective vertical axis V. The platform 50 is provided above with pairs of disc or wheel elements 10, whereas below it is provided with two supporting and advancement planes 51 that are mutually parallel and arranged in diametrically opposite positions that are suitable for restingly receiving and advancing the first moulding elements 5A, 50A. The two supporting and advancement planes 51 comprise rolling means 27. In particular, but not restrictively, the supporting and advancement planes 51 are of the roller type.

The transfer-closing carousel unit U_{CT} also comprises diametrically opposite upper platforms 55, which are rotatably around a respective vertical axis V and provided with disc or wheel elements 10. The upper platforms 55 are tiltable by a suitable cylinder or motor drive and are suitable for receiving, translating, tilting and lowering the second moulding elements 5B, 50B.

The movement devices 7 are configured for engaging with, and coupling, a respective second moulding element 5B, 50B with the corresponding first moulding element 5A, 50A such as to close the respective moulding unit 4 during a rotation, in particular by 180°, of the transfer-closing carousel unit U_{CT} and, at the end of the rotation, surrender the moulding unit 4 to a conveying module M_{T2} of the second portion T2.

Each movement device 7 comprises a grasping-tilting and conveying slide unit 16 supported and slidably drivable vertically on an upright17 of the transfer-closing carousel unit U_{CT}. The grasping slide unit 16 comprises pairs of removing rotating means 10 configured for engaging on opposite sides with a perimeter protrusion 19 obtained on each second moulding element 5B, 50B to move away/towards and tilt each second moulding element 5B in relation to the corresponding first moulding element 5A, 50A to open/close the respective moulding unit 4.

The apparatus 1 further comprises, upstream of the first portion T1 of path P, a rotatable opening-tilting-transfer carousel unit U_{AT}, configured for opening and simultaneously transferring the moulding units 4 from the second portion T2 of path, at the end of the polymerisation and shape-stabilisation process, to the first portion T1 of path P. The opening-transfer carousel unit U_{AT} is structurally and functionally conformed analogously to the transfer-closing carousel unit U_{CT} disclosed above, and thus comprises a platform 50 rotatable around a respective vertical axis V and provided with two roller 27 supporting and advancement planes 51.

In particular, the opening-transfer carousel unit U_{AT} comprises a pair of further diametrically opposite movement devices 8, which are alternatively drivable in a synchronised manner with the arrival in sequence of the closed moulding units 4.

The opening-transfer carousel unit U_{AT} also comprises two diametrically opposite upper platforms, which are rotatably around a respective vertical axis V and tiltable by a suitable cylinder or motor drive. The two upper platforms are suitable for receiving, translating, rotating, lifting and tilting the second moulding elements 5B, 50B.

The further movement devices 8 are configured for engaging by the rollers 10 with, and disengaging a respective second moulding element 5B, 50B by the corresponding first moulding element 5A, 50A so as to open the respective moulding unit 4 so during a rotation, in particular by 180°, of the opening-transfer carousel unit U_{AT} and, at the end of this rotation, surrendering the moulding unit 4 to a first conveying module M_{T1} of the first portion T1 of path P.

Owing to the closing-transfer rotation carousel unit U_{CT} and to the opening-transfer-rotation carousel unit U_{AT} that enable the operations of opening/closing to be temporally superimposed on the step of transfer by rotation of the moulding units from the first portion T1 to the second portion T2 and vice versa, there is a general optimisation of the productive process, with significant reduction of cycle time. Further, the presence of distinct and separate conveying modules M_{T1}, M_{T2}, which are drivable independently of one another, in combination with the aforesaid opening/closing and transfer carousel unit has the synergetic effect of further reducing production times and also enabling the type of object to be foamed to be varied in real time without undesired machine downtime.

Along the second portion T2 of path P a first 30 and a second 31 rotatable platform are provided, each of which is provided with a pair of conveying planes 32, 33, for example of the roller type, arranged in diametrically opposite positions. Such platforms 30, 31 are arranged for receiving and modifying the advancement direction of the moulding units 4, by indexed 180° rotation around respective vertical axes.

The apparatus 1 further comprises a control unit 40 operationally connected to all the conveying modules M_{T1}, M_{T2}, to the carousel units U_{AT} and U_{CT}, to the mixing heads 38, and to the rotatable platforms 30 31. By means of the control unit 40 it is possible to control and mutually coordinate the various parts of the apparatus 1 to move in an indexed manner or continuously the moulding units 4, at advancement speeds that differ from zone to zone of the advancement path P on the basis of the times required for the loading/unloading operations and the times required to complete the foaming reaction and the shape stabilisation of the moulded objects 2.

The apparatus 1 can be further provided with a mould-changing station S_{CS} the enables one or more moulding units 4 to be replaced with other different moulding units 4 for "just-in time" foaming of objects such as doors for refrigerators, of variable types and shapes.

The operation of the apparatus 1 is briefly described below.

When a moulding unit 4 reaches the end of a foaming cycle it reaches the last conveying module MT2 of the second portion T2 of path, after which it is intercepted and removed by the opening-transfer rotation carousel unit U_{AT}, which simultaneously opens and transfers the moulding unit 4 to the first portion T1. Along the area that extends between the opening/transfer carousel unit U_{AT} and the transfer/closing-rotation carousel unit U_{CT}, one or two operators first remove the door 2 that has just been moulded, then insert into the first moulding elements 5A, 50A a pair, or pairs of half-shells 3, 3' intended for generating a door or set of doors.

In the loading/unloading zone two adjacent positions are provided for two operators assigned to loading/unloading respective pairs of doors to be foamed/foamed doors. Only one position can also be provided for a sole operator and in this case the advancement speed or the weight time are chosen appropriately to enable the loading/unloading operations to be performed completely.

In order to perform this loading operation, one or more of the M_{T1} modules can proceed by steps of an appropriate duration, stopping the advancement of the open moulding units 4. Once the half-shells 3, 3' are loaded, the pair of half moulds in question is taken to the dispensing station S_{E}, where the mixing heads 38, pour the required dose of polyurethane/phenol mixture.

The polyurethane mixture can be dispensed by following the advancement of the lower moulding elements 5A, 50A to above the transfer/closing rotation carousel unit U_{CT}, from which the heads are retracted to permit reciprocal closing of the half moulds. The transfer/closing rotation carousel unit U_{CT} rotates by 180° and delivers the moulding unit 4 as soon as it is closed on a first module M_{T2} of the second portion T2 of path P.
The moulding unit 4, which is maintained well closed and clamped by the opposite series of lower presser rollers 27 and upper presser rollers 28, advances along the entire second portion T2 so as to be able to finish the polymerisation and shape-stabilisation process of the door 2. The hot air of the heating chamber 11 ensures preheating of the moulds and facilitates the foaming process.
The moulding unit 4 reaches the opening/transfer rotation carousel unit U_{AT}, which is activated to again open the moulding unit 4 and start a new cycle.
As can be seen from what has been disclosed, the apparatus 1 and the corresponding method enable the above declared objects to be achieved. In particular, a great reduction in production time, and also great versatility of use and productivity of the apparatus 1 are obtained.
The apparatus 1 permits extreme flexibility and product variety, with the possibility of adapting in real time to variable geometric shapes of the half shells of a door, without having to suffer prolonged machine downtime. The modular structure defined by the conveying modules M_{T} is simplified and light, consequently entails greater mechanical reliability and reduced weight and overall dimensions. As the inertia masses are reduced, the apparatus can also be driven faster than prior-art apparatuses.

It is possible to configure and dimension the apparatus 1 in a desired manner in function of the dimensions/types of objects to be processed and variations on and/or additions to what has been disclosed and illustrated in the appended drawings are possible without departing from the scope of the appended claims.

## Claims

1. Method for foaming objects (2) with a chemically reactive mixture, comprising the steps of
a) providing several moulding units (4) for said objects (2), intended for being conveyed along a closed advancement path (P) in which a foaming cycle occurs, each moulding unit (4) comprising a first moulding element (5A, 50A) and a second moulding element (5B, 50B) that are mutually couplable/uncouplable,
b) arranging in succession, one next to the other, according to a desired spatial sequence, a desired number of distinct and separate conveying modules (M_{T1}, M_{T2}) for said moulding units (4), so as to define a first portion (T1) and a second portion (T2) of said path (P), wherein along said first portion (T1) the steps occur of
**b.i)** advancement of said moulding units (4) being in an open position,
**b.ii)** extracting the already moulded objects (2),
**b.iii)** preparing said moulding units (4) for the subsequent foaming cycles of further objects (2),
**b.iv)** dispensing said chemically reactive mixture on the first moulding element (5A, 50A) of each moulding unit (4) arranged in the open position, and wherein
said moulding units (4), in the closed position, are advanced along said second portion (T2) of said path (P) while a polymerisation and shape-stabilisation process of said foamed objects (2), enclosed inside the respective moulding units (4), occurs
**CHARACTERISED IN THAT** said dispensing step b.iv) is followed by a rotation, closing and transferring step c), in which each moulding unit (4) is closed whilst, simultaneously, it is transferred from said first portion (T1) to said second portion (T2) of path (P) by a transfer-closing-rotation carousel unit (U_{CT}) provided with a pair of movement devices (7), wherein there is provided
**c.i)** rotating said closing-transfer carousel unit (U_{CT}) and simultaneously driving one of said movement devices (7) to reciprocally couple a first (5A, 50A) and a corresponding second (5B, 50B) moulding element so as to close the respective moulding unit (4) whilst said moulding unit (4) is transferred from said first portion (T1) to said second portion (T2) of path (P), and wherein there is provided
**c.ii)** returning, simultaneously with the rotation c.i) of said transfer-closing carousel unit (U_{CT}), the other movement device (7) to a position that is such as to receive a subsequent moulding unit (4) to be closed and transferred from said first portion (T1) to said second portion (T2),
AND **IN THAT**, at the end of said polymerisation and shape-stabilisation process, an opening and transfer rotation step t) is provided, in which each moulding unit (4) is opened whilst, simultaneously, said moulding unit (4) is transferred by rotation from said second portion (T2) to said first portion (T1) of path by an opening-transfer rotation carousel unit (U_{AT}) provided with a pair of further movement devices (8), wherein:
**t.i)** rotating said opening-transfer carousel unit (U_{AT}) and simultaneously driving one of said further movement devices (8) to reciprocally decouple a first (5A, 50A) and a corresponding second (5B, 50B) moulding element so as to open the respective moulding unit (4) whilst said moulding unit (4) is transferred by rotation from said second portion (T2) to said first portion (T1) of path (P), and wherein, there is provided
**t.ii)** returning simultaneously with the rotation t.i) of said opening-transfer carousel unit (U_{AT}) the other of said further movement devices (8) to a position that is such as to receive a subsequent moulding unit (4) to be opened and transferred to said conveying modules (M_{T1}) for the subsequent operations that occur in said first portion (T1).

2. Method according to claim 1, wherein, in said dispensing step b.iv) one or more mixing heads (38) are moved to follow each time, during dispensing, each advancing moulding unit (4), said one or more mixing heads (38) being movable in a synchronised manner along an operating stroke (Y) so as to follow each moulding unit (4) along a downstream part of said first portion (T1) of path (P) and continue until a zone is reached that is located on said closing-transfer carousel unit (U_{CT}).

3. Method according to claim 2, wherein said mixing heads (38) are driven independently of one another to deposit the chemically reactive mixture on different zones of one same moulding half cavity provided on a first moulding element (5A, 50A), or to deposit the chemically reactive mixture on several respective and separate moulding semi-cavities provided on each first moulding element (5A, 50A) and intended for simultaneous foaming of a set of distinct objects (2).

4. Method according to any preceding claim, wherein along said first portion (T1) of path (P), said moulding units (4), being in the open position, are advanced, each first moulding element (5A, 50A) being advanced along a first plane at a first height, and each second moulding element (5B, 50B) being advanced along a second plane to a second height that is greater than said first height, and wherein, during said closing and transfer rotation step c), one of said movement devices (7) of said closing-transfer rotation carousel unit (U_{CT}) intercepts and retains a second moulding element (5B, 50B) and receives, whilst it rotates, an overturning and downwardly translating movement to take from a tilted lying to a horizontal lying and lower said second moulding element (5B) onto the corresponding first moulding element (5A, 50A), so as to close a respective moulding unit (4) that is in the meantime transferred by rotation to a conveying module (M_{T2}) of said second portion (T2) of path (P), and simultaneously the other movement device (7) of said closing-transfer carousel unit (U_{CT}), whilst it rotates, receives an upward translation movement and a lying changing movement from horizontal to tilted, to prepare to intercept a subsequent second moulding element (5B).

5. Method according to any preceding claim, wherein during said opening and transfer step t), said opening-transfer rotation carousel unit (U_{AT}) receives a closed moulding unit (4) on reaching the end of said second portion (T2) of path, wherein one of said further movement devices (8) engages with the corresponding second moulding element (5B) of said moulding unit (4) and, whilst it rotates, receives an upward translation movement to raise and distance and overturn by tilting said second moulding element (5B) from the corresponding first moulding element (5A, 50A), to open said moulding unit (4) whilst it is transferred by rotating to a conveying module (M_{T1}) of said first portion (T1) of path (P), and simultaneously the other further movement device (8) of said opening-transfer rotation carousel unit (U_{AT}) receives a counter-overturning movement and downward translation to prepare to intercept and then open a subsequent moulding unit (4) coming from said second portion (T2) of path (P) and now reaching the end of the polymerisation process.

6. Method according to any preceding claim, wherein said conveying modules (M_{T1}, M_{T2}) are arranged so as to define a modular structure of desired length and shape defining said advancement path (P), wherein the number and mutual arrangement of said conveying modules (M_{T1}, M_{T2}) are chosen and optimised to adapt to specific process parameters, to characteristics of said chemically reactive mixture and to features of said objects (2) to be foamed, and wherein said conveying modules (M_{T1}, M_{T2}) are driven independently of one another to control and modify the advancement speed of one or more moulding units (4) in a desired manner along the entire advancement path (P) and in a manner which is variable from zone to zone on the basis of the times required for loading/unloading operations and the times required to complete the foaming reaction and the shape-stabilisation of the moulded objects (2) and wherein along said second portion (T2) of path (P) the advancement direction of said moulding units (4) is varied by rotatable platform means (30, 31) having a pair of conveying planes (32, 33) that are arranged diametrically opposite that alternatingly receive one or more moulding units (4) coming from a first direction, and by a rotation by steps of 180° of said rotatable platform means (30, 31), divert said one or more moulding units (4) to a second advancement direction.

7. Method according to any preceding claim, wherein each first moulding element comprises a first half mould (5A) having a shaped cavity intended for receiving a polyurethane or phenol mixture, and each second moulding element comprises a second half mould (5B), provided with a further shaped cavity, said first (5A) and second (5B) half moulds defining, in a closed configuration, a forming cavity in which objects (2) are foamed such as seats, cushions, or parts of seat for vehicles or similar products.

8. Method according to any one of claims 1 to 6, wherein said moulding units (4) are set up for foaming, by polyurethane or phenol mixture, objects (2) such as doors or walls for domestic or industrial refrigerators, walls for refrigerated display benches, parts of walls or insulating coatings for refrigerated vehicles or building or the like and, in general, panels or objects, mostly two-dimensional, having two prevalent dimensions compared with a third dimension, wherein said objects (2) are provided outside with two or more coating elements (3, 3') of the shell type or shaped panel type or of the sheet metal type or flat, curved or shaped by thermoforming type, between said two coating elements (3, 3') there being interposed an intermediate layer (6) in expanded polyurethane or phenol material, wherein each first (5A, 50A) moulding element and each second (5B, 50B) moulding element respectively comprise a first (50A) and a second (50B) containing and reinforcing structure intended for housing respective coating elements (3, 3') of said objects (2) that, in the closed configuration of each moulding units (4), are mutually coupled in a mutually facing and mating manner to enclose therewithin an intermediate thermally insulating layer that is generated by the foaming process.

9. Method according to any preceding claim, wherein during advancement along said first portion (T1) of path (P) each second moulding element (5B, 50B) is retained in a raised and/or overturned position with respect to the first moulding element (5A, 50A) associated therewith, by pairs of retaining and advancement-rotating-means (10) that engage on opposite sides with a perimeter protrusion (19) of said second moulding element (5B, 50B), so as to enable the formed object/s (2) to be removed and to be prepared, with possible loading of coating elements (3, 3'), for a subsequent foaming cycle.

10. Method according to any preceding claim, wherein said moulding units (4) are advanced along said path (P) by rolling means (27, 28) included in said conveying modules (M_{T1}, M_{T2}), wherein in the conveying modules (M_{T2}) of said second portion (T2) of path (P) first lower rolling means (27) and second upper rolling means (28) are set at a reciprocal operating distance (D) so as to define, along said advancement path (P), an advancement and clamping gap (I) for said moulding units (4), wherein, along said gap (I) there is provided exerting on opposite sides of said closed moulding units (4) opposed pressure actions (PI; P2) by said first rolling means (27) and said second rolling means (28) so as to maintain reciprocally closed and clamped said first (5A, 50A) and second (5B, 50B) moulding elements and so as to contrast the thrusts exerted by the expanding foam.

11. Method according to any preceding claim, wherein at least part of said advancement path (P) is enclosed inside a heating chamber (11) containing hot air for heating each moulding unit (4) to promote the foaming process.

12. Apparatus for foaming objects (2) with a chemically reactive mixture, comprising:
- a plurality of conveying modules (M_{T1}, M_{T2}) that are mutually distinct and separate, each provided with its own drive motor means (12) to be driven independently of the other operating modules to convey a plurality of moulding units (4) along an advancement path (P) along which a foaming cycle takes place, wherein each moulding unit (4) comprises a first moulding element (5A, 50A) and a second moulding element (5B, 50B), that are mutually couplable/uncouplable to foam said objects (2),
- said conveying modules (M_{T1}, M_{T2}) being reciprocally combinable so as to make up a modular structure of desired length and shape defining said advancement path (P), wherein the number and mutual arrangement of said conveying modules (M_{T1}, M_{T2}) are selectable to adapt to specific process parameters, to characteristics of said chemically reactive mixture and to features of said objects (2) to be foamed, wherein there is provided
- a first series of conveying modules (M_{T1}) arranged in succession for defining a first portion (T1) of path (P) and configured for advancing said moulding units (4), in open configuration, along said first portion (T1), said conveying modules (M_{T1}) defining:
- a station (Sx) for extracting the already moulded objects (2),
- one or more stations (Sp) for preparing/loading said moulding units (4) for the subsequent foaming cycles of further objects (2), and
- a station (S_{E}) for dispensing said chemically reactive mixture on the first moulding element (5A, 50A) of each moulding units (4) being in open configuration,
and wherein there is provided
- a second series of conveying modules (M_{T2}) arranged in succession for defining a second portion (T2) of path (P) and configured for the advancement of said moulding units (4), in closed configuration, along said second portion (T2), to permit the polymerisation and shape-stabilisation process of said foamed objects (2) enclosed inside the respective moulding units (4),
**CHARACTERISED IN THAT** it comprises a rotatable closing-transfer rotation carousel unit (U_{CT}), configured for closing and simultaneously transferring by rotating said moulding units (4) from said first portion (T1) of path (P) to said second portion (T2) of path (P), said closing-transfer rotation carousel unit (U_{CT}) including a pair of diametrically opposite movement devices (7), which are drivable alternately in a synchronised manner with the arrival in sequence of said open moulding units (4), and configured for engaging with, and coupling, a respective second moulding element (5B, 50B) with the corresponding first moulding element (5A, 50A) so as to close the respective moulding unit (4) during a rotation of said closing-transfer carousel unit (U_{CT}) and, at the end of said rotation, delivering it closed to a conveying module (M_{T2}) of said second portion (T2),
AND **IN THAT** it comprises a rotatable opening-transfer rotation carousel unit (U_{AT}) configured for opening and simultaneously transferring by rotating said moulding units (4) from said second portion (T2) of path, at the end of said polymerisation and shape stabilisation process, to said first portion (T1) of path (P), said opening-transfer carousel unit (U_{AT}) including a pair of further diametrically opposite movement devices (8), that are drivable alternately in a synchronised manner with the arrival in sequence of said closed moulding units (4), and configured for engaging with, and decoupling, a respective second moulding element (5B,50B) from the corresponding first moulding element (5A, 50A) so as to open the respective moulding unit (4) during a rotation of said opening-overturning and transfer carousel unit (U_{AT}) and at the end of said rotation, deliver the moulding unit (4) to a conveying module (M_{T1}) of said first portion (T1) of path (P).

13. Apparatus according to claim 12, wherein each of said movement devices (7) of said closing-transfer rotation carousel unit (U_{CT}) and each of said further movement devices (8) of said opening-transfer rotation carousel unit (U_{AT}) comprises two grasping slide units (16) mounted opposite at 180°, supported and drivable slidingly vertically on an upright (17) respectively of said closing-transfer carousel (U_{CT}) and of said opening-transfer carousel (U_{AT}), and wherein each grasping unit-slide (16) comprises pairs of intercepting and removing rotating means (10) configured for engaging on opposite sides with a perimeter protrusion (19) obtained on said second moulding elements (5B, 50B) to retain move away/towards and overturn each second moulding element (5B, 50B) in relation to the corresponding first moulding element (5A, 50A) to open/close the respective moulding unit (4).

14. Apparatus according to claim 12 or 13, wherein said opening-transfer carousel unit (U_{AT}) and said closing-transfer rotation carousel unit (U_{CT}) each comprise two platforms (50) counterposed at 180°, that are rotatable around a respective vertical axis (V) and are each provided with a supporting and advancement plane (51), said planes being mutually parallel and arranged in diametrically opposite positions, that are suitable for restingly receiving rotating and advancing said first moulding elements (5A, 50A).

15. Apparatus according to any one of claims 12 to 14, further comprising one or more mixing heads (38) configured for following and dispensing on each first advancing moulding element (5A, 50A) a quantity of said chemically reactive mixture, said one or more mixing heads (38) being supported by slide means (39) that is alternatively movable on a guide along an operating stroke (Y) that extends near a downstream part of said first portion (T1) of path (P) as far as it includes a zone located on said closing-transfer carousel unit (U_{CT}).

16. Apparatus according to claim 15, wherein said mixing heads (38) are driven independently of one another and synchronised to deposit the chemically reactive mixture on different zones of the same sole moulding semi-cavity provided on a first moulding element (5A, 50A), or to deposit the chemically reactive mixture on several respective and separate moulding semi-cavities provided on each first moulding element (5A, 50A) and intended for simultaneous foaming of a set of distinct objects (2).

17. Apparatus according to any one of claims 12 to 16, wherein the conveying modules (M_{T1}) of said first portion (T1) of path (P), arranged for extracting the already moulded objects (2), for preparing said moulding units (4) for the subsequent foaming cycles of further objects (2), and for dispensing the chemically reactive mixture, comprise lower resting and advancement planes (22) defined by rolling means (27) for supporting and advancing said first moulding elements (5A), and upper retaining and advancement units (21), provided with pairs of rotating means (10) to engage with perimeter protrusions (19) of said second moulding elements (5B, 50B) to retain and advance the latter in a parallel direction to, and at a greater height than, said first moulding elements (5A, 50A), according to tilted lying planes and wherein said upper retaining and advancement units (21) are configured for tilting said second moulding elements (5B, 50B) according to tilted planes (PI) so as to orient the second moulding elements (5B, 50B) to an operator/robot to facilitate the extraction and cleaning operations thereof and eventual loading of respective coating elements (3, 3').

18. Apparatus according to any one of claims 12 to 17, comprising a first (30) and a second (31) rotatable platform, arranged along said second portion (T2) of path (P), each being provided with a pair of conveying planes (32, 33) arranged in diametrically opposite positions, that are suitable for receiving and modifying the advancement direction of said moulding units (4), by indexed rotation of 180° respectively of said first (30) and second (31) rotatable platform.

19. Apparatus according to any one of claims 12 to 18, wherein the conveying modules (M_{T2}) of said second portion (T2) of path (P) comprise first lower rolling means (27) and second upper rolling means (28) for clamping and conveying said moulding units (4) along said path (P), said first rolling means (27) and said second rolling means (28) being positionable at a desired reciprocal operating distance (D) for defining, along said advancement path (P), a gap (I) for the advancement and clamping of said moulding units (4), said first rolling means (27) and said second rolling means (28) being configured for exerting on each moulding unit (4), on opposite sides, opposing and uniformly distributed pressure actions (P1, P2) so as to maintain reciprocally closed and clamped the respective first (5A, 50A) and second (5B, 50B) moulding elements and contrast the thrusts exerted by the expanding foam.

20. Apparatus according to any one of claims 12 to 19, comprising a heating chamber (11) that encloses one or more conveying modules, to heat each moulding unit (4) and promote the foaming process.

21. Apparatus according to claim 15, or according to any one of claims 16 to 20 as appended to claim 15, further comprising a control unit (40) operationally connected to all the conveying modules (M_{T1}, M_{T2}), to said opening-transfer carousel unit (U_{AT}), to said closing-transfer carousel unit (U_{CT}) and to said one or more mixing heads (38), for moving by steps or continuously said moulding units (4), at different advancement speeds from zone to zone of said advancement path (P) on the basis of the times required for the loading/unloading operations and the times required to complete the foaming reaction and the shape stabilisation of the moulded objects (2).

22. Apparatus according to any one of claims 12 to 21 further comprising a mould-changing station (S_{CS}) that is suitable for replacing one or more moulding units (4) with other different moulding units (4) for "just-in time" foaming of objects such as doors for refrigerator, with variable geometries.

## Patentansprüche

1. Verfahren zum Schäumen von Gegenständen (2) mit einer chemisch reaktiven Mischung, umfassend die Schritte
a) Bereitstellen mehrerer Formeinheiten (4) für die Gegenstände (2), die dazu bestimmt sind, entlang eines geschlossenen Beförderungswegs (P) befördert zu werden, in dem ein Schäumzyklus stattfindet, wobei jede Formeinheit (4) ein erstes Formelement (5A, 50A) und ein zweites Formelement (5B, 50B) umfasst, die wechselseitig koppelbar/entkoppelbar sind,
b) nacheinander Anordnen, eines nach dem anderen, gemäß einer gewünschten räumlichen Reihenfolge, einer gewünschten Anzahl von verschiedenen und getrennten Fördermodulen (M_{T1}, M_{T2}) für die Formeinheiten (4), um einen ersten Abschnitt (T1) und einen zweiten Abschnitt (T2) des Wegs (P) zu definieren, wobei entlang des ersten Abschnitts (T1) die Schritte stattfinden
**b.i)** Befördern der Formeinheiten (4), die in einer offenen Position sind,
**b.ii)** Entnehmen der bereits geformten Gegenstände (2),
**b.iii)** Vorbereiten der Formeinheiten (4) für die nachfolgenden Schäumzyklen weiterer Gegenstände (2),
**b.iv)** Abgeben der chemisch reaktiven Mischung an das erste Formelement (5A, 50A) jeder in der offenen Position angeordneten Formeinheit (4), und wobei
die Formeinheiten (4), in der geschlossenen Position, entlang des zweiten Abschnitts (T2) des Wegs (P) befördert werden, während ein Polymerisations- und Formstabilisierungsprozess der geschäumten Gegenstände (2), die innerhalb der jeweiligen Formeinheiten (4) eingeschlossen sind, stattfindet,
**DADURCH GEKENNZEICHNET, DASS** auf den Abgabeschritt b.iv) ein Dreh-, Schließ- und Übertragungsschritt c) folgt, in dem jede Formeinheit (4) geschlossen wird, während sie gleichzeitig von dem ersten Abschnitt (T1) zu dem zweiten Abschnitt (T2) des Wegs (P) übertragen wird mittels einer Übertragungs-Schließ-Dreh-Karusselleinheit (U_{CT}), die mit einem Paar von Bewegungsvorrichtungen (7) versehen ist, wobei dabei vorgesehen ist
**c.i)** Drehen der Schließ-Übertragungs-Karusselleinheit (U_{CT}) und gleichzeitiges Antreiben einer der Bewegungsvorrichtungen (7), um ein erstes (5A, 50A) und ein entsprechendes zweites (5B, 50B) Formelement reziprok zu koppeln, um die jeweilige Formeinheit (4) zu schließen, während die Formeinheit (4) von dem ersten Abschnitt (T1) zu dem zweiten Abschnitt (T2) des Wegs (P) übertragen wird, und wobei dabei vorgesehen ist
**c.ii)** Zurückfahren, gleichzeitig mit der Drehung c.i) der Übertragungs-Schließ-Dreh-Karusselleinheit (U_{CT}), der anderen Bewegungsvorrichtung (7) in eine Position, in der eine nachfolgende, zu schließende und von dem ersten Abschnitt (T1) an den zweiten Abschnitt (T2) zu übertragende Formeinheit (4) aufgenommen werden kann,
UND DADURCH, DASS am Ende des Polymerisations- und Formstabilisierungsprozesses ein Öffnungs- und Übertragungs-Dreh-Schritt t) vorgesehen ist, in dem jede Formeinheit (4) geöffnet wird, während die Formeinheit (4) gleichzeitig mittels einer Öffnungs-Übertragungs-Dreh-Karusselleinheit (U_{AT}), die mit einem Paar weiterer Bewegungsvorrichtungen (8) versehen ist, durch Drehung von dem zweiten Abschnitt (T2) zu dem ersten Abschnitt (T1) des Wegs übertragen wird, wobei:
**t.i)** Drehen der Öffnungs-Übertragungs-Karusselleinheit (U_{AT}) und gleichzeitiges Antreiben einer der weiteren Bewegungsvorrichtungen (8), um ein erstes (5A, 50A) und ein entsprechendes zweites (5B, 50B) Formelement reziprok zu entkoppeln, um die jeweilige Formeinheit (4) zu öffnen, während die Formeinheit (4) durch Drehung von dem zweiten Abschnitt (T2) zu dem ersten Abschnitt (T1) des Wegs (P) übertragen wird, und wobei dabei vorgesehen ist,
**t.ii)** Zurückfahren, gleichzeitig mit der Drehung t.i) der Öffnungs-Übertragungs-Karusselleinheit (U_{AT}) der anderen der weiteren Bewegungsvorrichtungen (8) in eine Position, in der eine nachfolgende zu öffnende und an die Fördermodule (M_{T1}) zu übertragende Formeinheit (4) für die nachfolgenden Vorgänge aufgenommen werden kann, die in dem ersten Abschnitt (T1) stattfinden.

2. Verfahren nach Anspruch 1, wobei in dem Abgabeschritt b.iv) ein oder mehrere Mischköpfe (38) bewegt werden, um jedes Mal während des Abgebens jeder befördernden Formeinheit (4) zu folgen, wobei einer oder mehrere Mischköpfe (38) in synchronisierter Weise entlang eines Arbeitshubs (Y) bewegbar sind, um jeder Formeinheit (4) entlang eines stromabwärtigen Teils des ersten Abschnitts (T1) des Wegs (P) zu folgen und weiter bis eine sich an der Schließ-Übertragungs-Karusselleinheit (U_{CT}) befindende Zone erreicht ist.

3. Verfahren nach Anspruch 2, wobei die Mischköpfe (38) unabhängig voneinander angetrieben werden, um die chemisch reaktive Mischung auf verschiedenen Zonen einer gleichen Form-Halbkavität eines ersten Formelements (5A, 50A) abzuscheiden, oder um die chemisch reaktive Mischung auf mehrere entsprechende und getrennte Form-Halbkavitäten, die auf jedem ersten Formelement (5A, 50A) vorgesehen sind und zum gleichzeitigen Schäumen eines Satzes verschiedener Gegenstände (2) bestimmt sind, abzuscheiden.

4. Verfahren nach einem der vorstehenden Ansprüche, wobei entlang des ersten Abschnitts (T1) des Wegs (P) die Formeinheiten (4), die sich in der offenen Position befinden, befördert werden, wobei jedes erste Formelement (5A, 50A) entlang einer ersten Ebene auf eine erste Höhe befördert wird, und jedes zweite Formelement (5B, 50B) entlang einer zweiten Ebene auf eine zweite Höhe befördert wird, die größer als die erste Höhe ist, und wobei während des Schließ- und Übertragungs-Dreh-Schritts c) eine von den Bewegungsvorrichtungen (7) der Schließ-Übertragungs-Karusselleinheit (U_{CT}) ein zweites Formelement (5B, 50B) auffängt und festhält und, während sie sich dreht, eine Umkipp- und Abwärts-Verschiebebewegung empfängt, um das zweite Formelement (5B) von einer schrägen Lage zu einer horizontalen Lage auf das entsprechende erste Formelement (5A, 50A) zu bringen, um eine jeweilige Formeinheit (4), die in der Zwischenzeit durch Drehung an ein Fördermodul (M_{T2}) des zweiten Abschnitts (T2) des Wegs (P) übertragen worden ist, zu schließen, und gleichzeitig die andere Bewegungsvorrichtung (7) der Schließ-Übertragungs-Karusselleinheit (U_{CT}), während sie sich dreht, eine Aufwärts-Verschiebebewegung und eine lageändernde Bewegung von horizontal zu schräg empfängt, um das Auffangen eines nachfolgenden zweiten Formelements (5B) vorzubereiten.

5. Verfahren nach einem der vorstehenden Ansprüche, wobei während des Öffnungs- und Übertragungs-Schritts t) die Öffnungs-Übertragungs-Dreh-Karusselleinheit (U_{AT}) eine geschlossene Formeinheit (4) bei Erreichen des Endes des zweiten Abschnitts (T2) des Wegs empfängt, wobei eine der weiteren Bewegungsvorrichtungen (8) mit dem entsprechenden zweiten Formelement (5B) der Formeinheit (4) in Eingriff steht und, während sie sich dreht, eine Aufwärts-Verschiebebewegung empfängt, um das zweite Formelement (5B) von dem entsprechenden ersten Formelement (5A, 50A) durch Kippen anzuheben und zu entfernen und umzukippen, um die Formeinheit (4) zu öffnen, während sie durch Drehen zu einem Fördermodul (M_{T1}) des ersten Abschnitts (T1) des Wegs (P) übertragen wird, und gleichzeitig die andere weitere Bewegungsvorrichtung (8) der Öffnungs-Übertragungs-Karusselleinheit (U_{AT}) eine Gegen-Umkipp-Bewegung und AbwärtsVerschiebung empfängt, um ein Auffangen und anschließendes Öffnen einer nachfolgenden, vom zweiten Abschnitt (T2) des Wegs (P) kommenden und nun das Ende des Polymerisationsprozesses erreichende Formeinheit (4) vorzubereiten.

6. Verfahren nach einem der vorstehenden Ansprüche, wobei die Fördermodule (M_{T1}, M_{T2}) so angeordnet sind, dass sie eine modulare Struktur gewünschter Länge und Form definieren, die den Beförderungsweg (P) definiert, wobei die Anzahl und wechselseitige Anordnung der Fördermodule (M_{T1}, M_{T2}) ausgewählt und optimiert sind, um sich an spezifische Prozessparameter, an Eigenschaften der chemisch reaktiven Mischung und an Merkmale der zu schäumenden Gegenstände (2) anzupassen, und wobei die Fördermodule (M_{T1}, M_{T2}) unabhängig voneinander angetrieben sind, um die Beförderungsgeschwindigkeit einer oder mehrerer Formeinheiten (4) in einer gewünschten Art und Weise entlang des gesamten Beförderungswegs (P) zu steuern und zu variieren und in einer Art und Weise, die variabel von Zone zu Zone ist auf der Basis der für Lade-/Entladevorgänge erforderlichen Zeiten und den Zeiten, die erforderlich sind, die Schäumreaktion und die Formstabilisierung der geformten Gegenstände (2) abzuschließen, und wobei entlang des zweiten Abschnitts (T2) des Wegs (P) die Beförderungsrichtung der Formeinheiten (4) mittels drehbarer Plattformmittel (30, 31), die ein Paar von Förderebenen (32, 33) aufweisen, variiert wird, die diametral gegenüberliegend angeordnet sind, die abwechselnd eine oder mehrere Formeinheiten (4) empfangen, die aus einer ersten Richtung kommen und durch eine Drehung in Schritten von 180° des drehbaren Plattformmittels (30, 31) ein oder mehrere Formeinheiten (4) in eine zweite Beförderungsrichtung umleiten.

7. Verfahren nach einem der vorstehenden Ansprüche, wobei jedes erste Formelement eine erste Formhälfte (5A) umfasst, die eine geformte Kavität aufweist, die zur Aufnahme einer Polyurethan- oder Phenolmischung bestimmt ist, und jedes zweite Formelement eine zweite Formhälfte (5B) umfasst, die mit einer weiteren geformten Kavität versehen ist, wobei die ersten (5A) und die zweiten (5B) Formhälften in einer geschlossenen Konfiguration einen Formkavität definieren, in welcher Gegenstände (2) wie Sitze, Polster oder Teile eines Sitzes für Fahrzeuge oder ähnliche Produkte geschäumt werden.

8. Verfahren nach einem der Ansprüche 1 bis 6, wobei die Formeinheiten (4) eingerichtet sind zum Schäumen von Gegenständen (2) aus Polyurethan- oder Phenolmischung, wie Türen oder Wände für Haushalts- oder Industriekühlschränke, Wände für Kühlvitrinen, Teile von Wänden oder isolierende Beschichtungen für Kühlfahrzeuge oder Gebäude oder dergleichen und im Allgemeinen von Platten oder überwiegend zweidimensionalen Gegenständen, die vorwiegend zwei Dimensionen aufweisen verglichen mit einer dritten Dimension, wobei die Gegenstände (2) außen mit zwei oder mehreren Beschichtungselementen (3, 3') vom Schalentyp oder Formplattentyp oder vom Metallblechtyp oder flach, gekrümmt oder geformt vom Thermoformtyp versehen sind, zwischen den zwei Beschichtungselementen (3, 3') dabei eine Zwischenschicht (6) aus expandiertem Polyurethan oder Phenolmaterial angeordnet ist, wobei jedes erste (5A, 50A) Formelement beziehungsweise jedes zweite (5B, 50B) Formelement jeweils eine erste (50A) und eine zweite (50B) enthaltende und verstärkende Struktur umfasst, die zur Einhausung der jeweiligen Beschichtungselemente (3, 3') der Gegenstände (2) bestimmt ist, die in der geschlossenen Konfiguration jeder der Formeinheiten (4) in einer sich wechselseitig zugewandten und paarenden Art und Weise gekoppelt sind, um darin eine thermisch isolierende Zwischenschicht einzuschließen, die durch den Schäumprozess erzeugt wird.

9. Verfahren nach einem der vorstehenden Ansprüche, wobei während eines Beförderns entlang des ersten Abschnitts (T1) des Wegs (P) jedes zweite Formelement (5B, 50B) in einer angehobenen und/oder umgekippten Position in Bezug auf das erste Formelement (5A, 50A), das diesem zugeordnet ist, gehalten wird, mittels Paaren von Halte- und Beförderungs-Dreh-Mitteln (10), die an gegenüberliegenden Seiten mit einem Umfangsvorsprung (19) des zweiten Formelements (5B, 50B) im Eingriff stehen, um zu ermöglichen, dass das/die geformte(n) Gegenstand/Gegenstände (2) entfernt und mit einer möglichen Beladung der Beschichtungselemente (3, 3') für einen nachfolgenden Schäumzyklus vorbereitet werden.

10. Verfahren nach einem der vorstehenden Ansprüche, wobei die Formeinheiten (4) entlang des Wegs (P) mittels eines in die Fördermodule (M_{T1}, M_{T2}) eingeschlossenen Rollmittels (27, 28) befördert werden, wobei in den Fördermodulen (M_{T2}) des zweiten Abschnitts (T2) des Wegs (P) erste untere Rollmittel (27) und zweite obere Rollmittel (28) auf einen reziproken Arbeitsabstand (D) eingestellt sind, um entlang des Beförderungswegs (P) einen Beförderungs- und Klemmspalt (I) für die Formeinheiten (4) zu definieren, wobei dabei entlang des Spalts (I) vorgesehen ist, an gegenüberliegenden Seiten der geschlossenen Formeinheiten (4) mittels den ersten Rollmitteln (27) und den zweiten Rollmittel (28) entgegengesetzte Druckwirkungen (P1; P2) auszuüben, um die ersten (5A, 50A) und zweiten (5B, 50B) Formelemente reziprok geschlossen und geklemmt zu halten, und um so den von dem expandierenden Schaum ausgeübten Druckkräften entgegenzuwirken.

11. Verfahren nach einem der vorstehenden Ansprüche, wobei wenigstens ein Teil des Beförderungswegs (P) innerhalb einer Heizkammer (11) eingeschlossen ist, die Heißluft zum Erwärmen jeder Formeinheit (4) enthält, um den Schäumprozess zu fördern.

12. Vorrichtung zum Schäumen von Gegenständen (2) mit einer chemisch reaktiven Mischung, umfassend:
- eine Vielzahl von Fördermodulen (M_{T1}, M_{T2}) die wechselseitig verschieden und getrennt sind, jeweils mit ihren eigenen Antriebsmotormitteln (12) versehen sind, um unabhängig von den anderen Betriebsmodulen angetrieben zu werden, um eine Vielzahl von Formeinheiten (4) entlang eines Beförderungswegs (P) zu fördern, entlang dem ein Schäumzyklus stattfindet, wobei jede Formeinheit (4) ein erstes Formelement (5A, 50A) und ein zweites Formelement (5B, 50B) umfasst, die wechselseitig koppelbar/entkoppelbar sind, um die Gegenstände (2) zu schäumen,
- wobei die Fördermodule (M_{T1}, M_{T2}) reziprok kombinierbar sind, um eine modulare Struktur von gewünschter Länge und Form zu bilden, die den Beförderungsweg (P) definiert, wobei die Anzahl und die wechselseitige Anordnung der Fördermodule (M_{T1}, M_{T2}) zur Anpassung an spezifische Prozessparameter, an Eigenschaften der chemisch reaktiven Mischung und an Merkmale der zu schäumenden Gegenstände (2) wählbar sind, wobei dabei vorgesehen ist
- eine erste Reihe von Fördermodulen (M_{T1}), die nacheinander angeordnet sind, um einen ersten Abschnitt (T1) des Wegs (P) zu definieren und die zum Fördern der Formeinheiten (4) in offener Konfiguration entlang des ersten Abschnitts (T1) konfiguriert sind, wobei die Fördermodule (M_{T1}) definieren:
- eine Station (S_{X}) zum Entnehmen der bereits geformten Gegenstände (2),
- eine oder mehrere Stationen (S_{P}) zum Vorbereiten/Laden der Formeinheiten (4) für die nachfolgenden Schäumzyklen weiterer Gegenstände (2), und
- eine Station (S_{E}) zur Abgabe der chemisch reaktiven Mischung auf das erste Formelement (5A, 50A) jeder Formeinheit (4), die in einer offenen Konfiguration ist,
und wobei dabei vorgesehen ist
- eine zweite Reihe von Fördermodulen (M_{T2}), die nacheinander angeordnet sind, um einen zweiten Abschnitt (T2) des Wegs (P) zu definieren, und die zum Befördern der Formeinheiten (4) in geschlossener Konfiguration entlang des zweiten Abschnitts (T2) konfiguriert sind, um den Polymerisations- und Formstabilisierungsprozess der geschäumten Gegenstände (2), die innerhalb der jeweiligen Formeinheiten (4) eingeschlossen sind, zu ermöglichen.
**DADURCH GEKENNZEICHNET, DASS** sie eine drehbare Schließ-Übertragungs-Dreh-Karusselleinheit (U_{CT}) umfasst, die zum Schließen und gleichzeitigen Übertragen durch Drehen der Formeinheiten (4) von dem ersten Abschnitt (T1) des Wegs (P) zu dem zweiten Abschnitt (T2) des Wegs (P) konfiguriert ist, wobei die Schließ-Übertragungs-Dreh-Karusselleinheit (U_{CT}) ein Paar diametral gegenüberliegender Bewegungsvorrichtungen (7) einschließt, die in synchronisierter Art und Weise mit einer Reihenfolge der Ankunft der offenen Formeinheiten (4) abwechselnd antreibbar sind, und konfiguriert ist zum in Eingriffstehen mit und Koppeln eines jeweiligen zweiten Formelements (5B, 50B) mit dem entsprechenden ersten Formelement (5A, 50A), um die jeweilige Formeinheit (4) während einer Drehung der Schließ-Übertragungs-Karusselleinheit (U_{CT}) zu schließen, und sie am Ende der Drehung geschlossen an ein Fördermodul (M_{T2}) des zweiten Abschnitts (T2) zu liefern,
UND DADURCH, DASS sie eine drehbare Öffnungs-Übertragungs-Dreh-Karusselleinheit (U_{AT}) umfasst, die zum Öffnen und gleichzeitigem Übertragen durch Drehen der Formeinheiten (4) von dem zweiten Abschnitt (T2) des Wegs an den ersten Abschnitt (T1) des Wegs (P) an dem Ende des Polymerisations- und Formstabilisierungsprozesses konfiguriert ist, wobei die Öffnungs-Übertragungs-Dreh-Karusselleinheit (U_{AT}) ein Paar weiterer diametral gegenüberliegender Bewegungsvorrichtungen (8) einschließt, die in synchronisierter Art und Weise mit einer Reihenfolge der Ankunft der geschlossenen Formeinheiten (4) abwechselnd antreibbar sind, und die zum in Eingriff stehen mit und Entkoppeln eines jeweiligen zweiten Formelements (5B, 50B) vom entsprechenden ersten Formelement (5A, 50A) zum Öffnen der jeweiligen Formeinheit (4) während einer Drehung der Öffnungs-Umkipp- und Übertragungs-Karusselleinheit (U_{AT}) konfiguriert ist und dazu, die Formeinheit (4) am Ende der Drehung an ein Fördermodul (M_{T1}) des ersten Abschnitts (T1) des Wegs (P) zu liefern.

13. Vorrichtung nach Anspruch 12, wobei jede der Bewegungsvorrichtungen (7) der Schließ-Übertragungs-Dreh-Karusselleinheit (U_{CT}) und jede der weiteren Bewegungsvorrichtungen (8) der Öffnungs-Übertragungs-Dreh-Karusselleinheit (U_{AT}) zwei um 180° gegenüberliegend befestigte Greiferschlitteneinheiten (16) umfasst, die an einem Ständer (17) der Schließ-Übertragungs-Karusselleinheit (U_{CT}) beziehungsweise des Öffnungs-Übertragungs-Karussells (U_{AT}) abgestützt und vertikal verschiebbar antreibbar sind, und wobei jede Greiferschlitteneinheit (16) Paare von Auffang- und Entfern-Drehmitteln (10) umfasst, die zum in Eingriff stehen mit gegenüberliegenden Seiten mit einem Umfangsvorsprung (19) konfiguriert sind, der an den zweiten Formelementen (5B, 50B) erhalten ist, um jedes zweite Formelement (5B, 50B) beim Wegziehen/Hinbewegen und Umkippen in Bezug auf das entsprechende erste Formelement (5A, 50A) zum Öffnen/Schließen der jeweiligen Formeinheit (4) zu halten.

14. Vorrichtung nach Anspruch 12 oder 13, wobei die Öffnungs-Übertragungs-Karusselleinheit (U_{AT}) und die Schließ-Übertragungs-Dreh-Karusselleinheit (U_{CT}) jeweils zwei um 180° entgegengesetzte Plattformen (50) aufweisen, die um eine jeweilige vertikale Achse (V) drehbar sind und jeweils mit einer Stütz- und einer Beförderungsebene (51) versehen sind, wobei die Ebenen wechselseitig parallel und in diametral entgegengesetzten Positionen angeordnet sind, die zum ruhenden Aufnehmen, Drehen und Fördern der ersten Formelemente (5A, 50A) geeignet sind.

15. Vorrichtung nach einem der Ansprüche 12 bis 14, weiter umfassend einen oder mehrere Mischköpfe (38), die zum Folgen und Abgeben einer Menge der chemisch reaktiven Mischung auf jedes beförderte Formelement (5A, 50A) konfiguriert sind, wobei der eine oder die mehreren Mischköpfe (38) durch ein Gleitmittel (39) gestützt sind, die alternativ entlang einer Führung entlang eines Arbeitshubs (Y) bewegbar sind, der sich Nahe eines stromabwärtigen Teils des ersten Abschnitts (T1) des Wegs (P) erstreckt soweit es eine Zone einschließt, die auf der Schließ-Übertragungs-Karusselleinheit (U_{CT}) angeordnet ist.

16. Vorrichtung nach Anspruch 15, wobei die Mischköpfe (38) unabhängig voneinander angetrieben und synchronisiert sind, um die chemisch reaktive Mischung auf verschiedenen Zonen der gleichen einzigen Halbkavität abzuscheiden, die auf einem ersten Formelement (5A, 50A) vorgesehen ist, oder um die chemisch reaktive Mischung auf mehreren jeweiligen und getrennten Form-Halbkavitäten abzuscheiden, die an jedem ersten Formelement (5A, 50A) vorgesehen sind und zum gleichzeitigen Schäumen eines Satzes von unterschiedlichen Gegenständen (2) vorgesehen sind.

17. Vorrichtung nach einem der Ansprüche 12 bis 16, wobei die Fördermodule (M_{T1}) des ersten Abschnitts (T1) des Wegs (P), die zum Entnehmen der bereits geformten Gegenstände (2) angeordnet sind, zum Vorbereiten der Formeinheiten (4) für die nachfolgenden Schäumzyklen weiterer Gegenstände (2) und zur Abgabe der chemisch reaktiven Mischung, untere Ruhe- und Beförderungsebenen (22) umfassen, die durch Rollmittel (27) zum Stützen und Befördern der ersten Formelemente (5A) definiert sind, und obere Halte- und Beförderungseinheiten (21), die mit Paaren von Drehmitteln (10) versehen sind, um an Umfangsvorsprüngen (19) der zweiten Formelemente (5B, 50B) anzugreifen zum Halten und Bewegen letzterer in einer parallelen Richtung zu und in einer größeren Höhe als die ersten Formelemente (5A, 50A), gemäß den schrägen Ebenen, und wobei die oberen Halte- und Beförderungseinheiten (21) zum Kippen der zweiten Formelemente (5B, 50B) gemäß den schrägen Ebenen (P1) konfiguriert sind, um die zweiten Formelemente (5B, 50B) zu einem Bediener/Roboter auszurichten, um deren Entnahme- und Reinigungsvorgänge und die eventuelle Beladung der jeweiligen Beschichtungselemente (3, 3') zu erleichtern.

18. Vorrichtung nach einem der Ansprüche 12 bis 17, umfassend eine erste (30) und eine zweite (31) drehbare Plattform, die entlang des zweiten Abschnitts (T2) des Wegs (P) angeordnet sind und jeweils mit einem Paar Förderebenen (32, 33) versehen sind, die in diametral gegenüberliegenden Positionen angeordnet sind, die zum Aufnehmen und Modifizieren der Beförderungsrichtung der Formeinheiten (4) durch indexierte Drehung von 180° der ersten (30) beziehungsweise zweiten (31) drehbaren Plattform geeignet sind.

19. Vorrichtung nach einem der Ansprüche 12 bis 18, wobei die Fördermodule (M_{T2}) des zweiten Abschnitts (T2) des Wegs (P) erste untere Rollmittel (27) und zweite obere Rollmittel (28) zum Klemmen und Fördern der Formeinheiten (4) entlang eines Wegs (P) umfassen, wobei das erste Rollmittel (27) und das zweite Rollmittel (28) an gewünschten wechselseitigen Arbeitsabständen (D) zum Definieren entlang des Beförderungswegs (P) positionierbar sind, ein Spalt (I) für das Befördern und Klemmen der Formeinheiten (4), wobei das erste Rollmittel (27) und das zweite Rollmittel (28) dazu konfiguriert sind, auf jeder Formeinheit (4) auf gegenüberliegenden Seiten entgegengesetzte und gleichmäßig verteilte Druckwirkungen (P1, P2) auszuüben, um erste (5A, 50A) beziehungsweise zweite (5B, 50B) Formelemente reziprok geschlossenen und geklemmt zu halten und den von dem expandierenden Schaum ausgeübten Druckkräften entgegenzuwirken.

20. Vorrichtung nach einem der Ansprüche 12 bis 19, umfassend eine Heizkammer (11), die ein oder mehrere Fördermodule einschließt, um jede Formeinheit (4) zu erwärmen und den Schäumprozess zu fördern.

21. Vorrichtung nach Anspruch 15 oder nach einem der Ansprüche 16 bis 20, wie an Anspruch 15 angehängt, weiter umfassend eine Steuereinheit (40), die operativ mit allen Fördermodulen (M_{T1}, M_{T2}), mit der Öffnungs-Übertragungs-Karusselleinheit (U_{AT}), der Schließ-Übertragungs-Karusselleinheit (U_{CT}) und mit dem einen oder den mehreren Mischköpfen (38) angeschlossen sind, um die Formeinheiten (4) schrittweise oder kontinuierlich mit unterschiedlichen Beförderungsgeschwindigkeiten von Zone zu Zone des Beförderungswegs (P) auf der Basis der für Lade-/Entladevorgänge erforderlichen Zeiten und der Zeiten, die erforderlich sind, um die Schäumreaktion und die Formstabilisierung der geformten Gegenstände (2) abzuschließen.

22. Vorrichtung nach einem der Ansprüche 12 bis 21, weiter umfassend eine Formänderungsstation (S_{CS}), die geeignet ist, eine oder mehrere Formeinheiten (4) durch andere unterschiedliche Formeinheiten (4) zum "Just-in-Time"-Schäumen von Gegenständen, wie Türen für einen Kühlschrank, mit variablen Geometrien, zu ersetzen.

## Revendications

1. Procédé de moussage d'objets (2) avec un mélange chimiquement réactif, comprenant les étapes consistant à :
a) fournir plusieurs unités de moulage (4) pour lesdits objets (2), destinés à être acheminés le long d'un trajet d'avancement fermé (P) dans lequel un cycle de moussage se produit, chaque unité de moulage (4) comprenant un premier élément de moulage (5A, 50A) et un second élément de moulage (5B, 50B) qui peuvent être mutuellement accouplés/désaccouplés,
b) agencer à la suite, l'un à côté de l'autre, selon une séquence spatiale souhaitée, un nombre souhaité de modules de transport distincts et séparés (M_{T1}, M_{T2}) pour lesdites unités de moulage (4) de manière à définir une première partie (T1) et une seconde partie (T2) dudit trajet (P), dans lequel, le long de ladite première partie (T1), se produisent les étapes consistant à :
**b.i)** faire avancer lesdites unités de moulage (4) qui sont en position ouverte,
**b.ii)** extraire les objets déjà moulés (2),
**b.iii)** préparer lesdites unités de moulage (4) pour les cycles de moussage ultérieurs d'autres objets (2),
**b.iv)** distribuer ledit mélange chimiquement réactif sur le premier élément de moulage (5A, 50A) de chaque unité de moulage (4) agencée en position ouverte, et dans lequel
lesdites unités de moulage (4), en position fermée, sont avancées le long de ladite deuxième partie (T2) dudit trajet (P) tandis que se produit un processus de polymérisation et de stabilisation de forme desdits objets moussés (2) enserrés dans les unités de moulage respectives (4),
**CARACTÉRISÉ EN CE QUE** ladite étape de distribution b.iv) est suivie d'une étape de rotation, de fermeture et de transfert c), dans laquelle chaque unité de moulage (4) est fermée tandis qu'elle est transférée simultanément de ladite première partie (T1) à ladite seconde partie (T2) du trajet (P) par une unité de carrousel de transfert-fermeture-rotation (U_{CT}) pourvue d'une paire de dispositifs de déplacement (7), dans lequel on effectue
**c.i)** la rotation de ladite unité de carrousel de fermeture-transfert (U_{CT}) et simultanément l'entraînement de l'un desdits dispositifs de déplacement (7) pour accoupler de manière interactive un premier (5A, 50A) et un second correspondant (5B, 50B) élément de moulage de manière à fermer l'unité de moulage respective (4) tandis que ladite unité de moulage (4) est transférée de ladite première partie (T1) à ladite seconde partie (T2) du trajet (P), et dans lequel on effectue
**c.ii)** le retour, simultanément avec la rotation c.i) de ladite unité de carrousel de transfert-fermeture (U_{CT}), de l'autre dispositif de déplacement (7) dans une position qui est telle qu'il reçoive une unité de moulage ultérieure (4) à fermer et à transférer de ladite première partie (T1) à ladite seconde partie (T2),
ET **EN CE QUE**, à la fin dudit processus de polymérisation et de stabilisation de forme, il est prévu une étape d'ouverture et de transfert par rotation t), dans laquelle chaque unité de moulage (4) est ouverte tandis que, simultanément, ladite unité de moulage (4) est transférée par rotation de ladite seconde partie (T2) à ladite première partie (T1) du trajet par une unité de carrousel d'ouverture-transfert-rotation (U_{AT}) avec une paire d'autres dispositifs de déplacement (8), dans lequel :
**t.i)** la rotation de ladite unité de carrousel d'ouverture-transfert (U_{AT}) et simultanément l'entraînement de l'un desdits autres dispositifs de déplacement (8) pour désaccoupler de manière interactive un premier (5A, 50A) et un second correspondant (5B, 50B) élément de moulage de manière à ouvrir l'unité de moulage respective (4) tandis que ladite unité de moulage (4) est transférée par rotation de ladite seconde partie (T2) à ladite première partie (T1) du trajet (P), et dans lequel on effectue :
**t.ii)** un retour, simultanément avec la rotation t.i) de ladite unité de carrousel d'ouverture-transfert (U_{AT}), de l'autre desdits autres dispositifs de déplacement (8) dans une position qui est telle qu'il reçoive une unité de moulage ultérieure (4) à ouvrir et à transférer auxdits modules de transport (M_{T1}) pour les opérations ultérieures qui se produisent dans ladite première partie (T1).

2. Procédé selon la revendication 1, dans lequel, dans ladite étape de distribution b.iv), une ou plusieurs têtes de mélange (38) est ou sont déplacées pour suivre chaque fois, au cours de la distribution, chaque unité de moulage avançant (4), lesdites une ou plusieurs têtes de mélange (38) étant mobiles de manière synchronisée le long d'une course de fonctionnement (Y) de manière à suivre chaque unité de moulage (4) le long d'une partie aval de ladite première partie (T1) du trajet (P) et à continuer jusqu'à ce qu'une zone soit atteinte qui soit située sur ladite unité de carrousel de fermeture-transfert (U_{CT}).

3. Procédé selon la revendication 2, dans lequel lesdites têtes de mélange (38) sont entraînées indépendamment l'une de l'autre pour déposer le mélange chimiquement réactif sur les différentes zones d'une même demi-cavité de moulage située sur un premier élément de moulage (5A, 50A) ou déposer le mélange chimiquement réactif sur plusieurs semi-cavités de moulage respectives et séparées situées sur chaque premier élément de moulage (5A, 50A) et destinées à un moussage simultané d'un ensemble d'objets distincts (2).

4. Procédé selon l'une quelconque des revendications précédentes, dans lequel, le long de ladite première partie (T1) du trajet (P), lesdites unités de moulage (4), qui sont en position ouverte, sont avancées, chaque premier élément de moulage (5A, 50A) étant avancé le long d'un premier plan à une première hauteur et chaque second élément de moulage (5B, 50B) étant avancé le long d'un second plan à une seconde hauteur qui est supérieure à ladite première hauteur, et dans lequel, au cours de ladite étape c) de fermeture-transfert-rotation, l'un desdits dispositifs de déplacement (7) de ladite unité de carrousel de fermeture-transfert-rotation (U_{CT}) intercepte et retient un second élément de moulage (5A, 50B) et reçoit, tandis qu'il tourne, un mouvement de retournement et de translation vers le bas pour passer d'une disposition inclinée à une disposition horizontale et abaisser ledit second élément de moulage (5B) sur le premier élément de moulage correspondant (5A, 50A) de manière à fermer l'unité de moulage respective (4) qui est dans l'intervalle transférée par rotation à un module de transport (M_{T2}) de ladite seconde partie (T2) de trajet (P), et simultanément l'autre dispositif de déplacement (7) de ladite unité de carrousel de fermeture-transfert (U_{CT}), tandis qu'il tourne, reçoit un mouvement de translation vers le haut et un mouvement de changement de la disposition horizontale à la disposition inclinée pour se préparer à intercepter un second élément de moulage ultérieur (5B).

5. Procédé selon l'une quelconque des revendications précédentes, dans lequel, au cours de ladite étape d'ouverture-transfert t), ladite unité de carrousel d'ouverture-transfert-rotation (U_{AT}) reçoit une unité de moulage fermée (4) lorsqu'elle atteint la fin de ladite seconde partie (T2) du trajet, dans lequel l'un desdits autres dispositifs de déplacement (8) s'engage sur le second élément de moulage correspondant (5B) de ladite unité de moulage (4) et, tandis qu'elle tourne, reçoit un mouvement de translation vers le haut pour s'élever et se distancer et se retourner par inclinaison dudit second élément de moulage (5B) par rapport au premier élément de moulage correspondant (5A, 50A), pour ouvrir ladite unité de moulage (4) tandis qu'elle est transférée par rotation à un module de transport (M_{T1}) de ladite première partie (T1) du trajet (P) et, simultanément, l'autre dispositif de déplacement (8) de ladite unité de carrousel d'ouverture-transfert-rotation (U_{AT}) reçoit un mouvement de contre-retournement et une translation vers le bas pour se préparer à intercepter et à ensuite ouvrir une unité de moulage ultérieur (4) venant de ladite seconde partie (T2) du trajet (P) et atteignant à présent la fin du processus de polymérisation.

6. Procédé selon l'une quelconque des revendications précédentes, dans lequel lesdits modules de transport (M_{T1}, M_{T2}) sont agencés de manière à définir une structure modulaire de longueur et de forme souhaitées définissant ledit trajet d'avancement (P), dans lequel le nombre et l'agencement mutuel desdits modules de transport (M_{T1}, M_{T2}) sont choisis et optimisés pour s'adapter à des paramètres de traitement spécifiques, à des caractéristiques dudit mélange chimiquement réactif et à des caractéristiques desdits objets (2) à mousser, et dans lequel lesdits modules de transport (M_{T1}, M_{T2}) sont entraînés indépendamment l'un de l'autre pour commander et modifier la vitesse d'avancement d'une ou plusieurs unités de moulage (4) de manière souhaitée le long de la totalité du trajet d'avancement (P) et d'une manière qui est variable d'une zone à l'autre sur la base des périodes requises pour les opérations de chargement/déchargement et des périodes requises pour compléter la réaction de moussage et la stabilisation de forme des objets moulés (2) et dans lequel, le long de ladite seconde partie (T2) du trajet (P), la direction d'avancement desdites unités de moulage (4) est modifiée par des moyens à plateforme rotative (30, 31) ayant une paire de plans de transport (32, 33) qui sont agencés diamétralement opposés et qui reçoivent en alternance une ou plusieurs unités de moulage (4) venant d'une première direction et, par une rotation par étapes de 180° desdits moyens à plateforme rotative (30, 31), dévient lesdites une ou plusieurs unités de moulage (4) dans une seconde direction d'avancement.

7. Procédé selon l'une quelconque des revendications précédentes, dans lequel chaque premier élément de moulage comprend un premier demi-moule (5A) ayant une cavité moulée destinée à recevoir un mélange de polyuréthane et de phénol et chaque second élément de moulage comprend un second demi-moule (5B) pourvu d'une autre cavité moulée, lesdits premier (5A) et second (5B) demi-moules définissant en configuration fermée une cavité formatrice dans laquelle des objets (2) sont moussés, notamment des sièges, des coussins ou des parties de sièges pour véhicules ou des produits similaires.

8. Procédé selon l'une quelconque des revendications 1 à 6, dans lequel lesdites unités de moulage (4) sont établies pour mousser, par un mélange de polyuréthane ou de phénol, des objets (2) tels que des portes ou des parois pour réfrigérateurs ménagers ou industriels, des parois pour des chevalets d'affichage réfrigérés, des parties de parois ou des revêtements isolants pour véhicules réfrigérés ou pour la construction ou analogue et, en général, des panneaux ou des objets, la plupart du temps bidimensionnels, ayant deux dimensions prévalentes en comparaison d'une troisième dimension, dans lequel lesdits objets (2) sont pourvus extérieurement de deux ou plusieurs éléments de revêtement (3, 3') du type à coque ou du type de panneau moulé ou du type de métal en feuille, ou plats, incurvés ou du type moulé par thermoformage, en intercalant entre lesdits deux éléments de revêtement (3, 3') une couche intermédiaire (6) en matériau de type polyuréthane ou phénol expansé, dans lequel chaque premier élément de moulage (5A, 50B) et chaque second (5B, 50B) élément de moulage comprennent respectivement une première (50A) et une seconde (50B) structure de confinement et de renfort destinée à loger des éléments de revêtement respectifs (3, 3') desdits objets (2) qui, en configuration fermée de chaque unité de moulage (4), sont mutuellement accouplés de manière à se faire face et à se conjuguer pour enserrer entre eux une couche thermo-isolante intermédiaire qui est générée par le processus de moussage.

9. Procédé selon l'une quelconque des revendications précédentes, dans lequel, au cours de l'avancement le long de ladite première partie (T1) du trajet (P), chaque second élément de moulage (5B, 50B) est retenu en position dressée et/ou retournée par rapport au premier élément de moulage (5A, 50A) qui lui est associé, par des paires de moyens de retenue et d'avancement par rotation (10) qui s'engagent sur les côtés opposés sur une saillie périphérique (19) dudit second élément de moulage (5B, 50B) de manière à pouvoir retirer le ou les objets formés (2) et les préparer avec un chargement possible d'éléments de revêtement (3, 3') pour un cycle de moussage ultérieur.

10. Procédé selon l'une quelconque des revendications précédentes, dans lequel lesdites unités de moulage (4) sont avancées le long dudit trajet (P) par des moyens roulants (27, 28) inclus dans lesdits modules de transport (M_{T1}, M_{T2}), dans lequel, dans lesdits modules de transport (M_{T2}) de ladite seconde partie (T2) du trajet (P), des premiers moyens de roulement inférieurs (27) et des seconds moyens de roulement supérieurs (28) sont réglés à une distance de fonctionnement mutuelle (D) de manière à définir, le long dudit trajet d'avancement (P), un intervalle d'avancement et de serrage (I) pour lesdites unités de moulage (4), dans lequel, le long dudit intervalle (I), il est prévu d'exercer sur les côtés opposés desdites unités de moulage fermées (4) des actions de pression opposées (P1 ; P2) par lesdits premiers moyens de roulement (27) et lesdits seconds moyens de roulement (28) de manière à maintenir fermés et serrés mutuellement lesdits premiers (5A, 50A) et seconds (5B, 50B) éléments de moulage et de manière à s'opposer aux poussées exercées par la mousse en expansion.

11. Procédé selon l'une quelconque des revendications précédentes, dans lequel au moins une partie du trajet d'avancement (P) est enserrée à l'intérieur d'une chambre de chauffage (11) contenant de l'air chaud pour chauffer chaque unité de moulage (4) afin de promouvoir le processus de moussage.

12. Appareil de moussage d'objets (2) avec un mélange chimique réactif, comprenant :
- une pluralité de modules de transport (M_{T1}, M_{T2}) qui sont mutuellement distincts et séparés, chacun étant pourvu de ses propres moyens motorisés d'entraînement (12) pour être entraînés indépendamment des autres modules opératoires pour transporter une pluralité d'unités de moulage (4) le long d'un trajet d'avancement (P) le long duquel un cycle de moulage a lieu, dans lequel chaque unité de moulage (4) comprend un premier élément de moulage (5A, 50A) et un second élément de moulage (5B, 50B) qui peuvent être mutuellement couplés/désaccouplés pour mousser lesdits objets (2),
- lesdits modules de transport (M_{T1}, M_{T2}) pouvant être combinés mutuellement de manière à constituer une structure modulaire de longueur et de forme souhaitées définissant ledit trajet d'avancement (P), dans lequel le nombre et l'agencement mutuel desdits modules de transport (M_{T1}, M_{T2}) peuvent être sélectionnés pour s'adapter à des paramètres de traitement spécifiques, à des caractéristiques dudit mélange chimiquement réactif et à des caractéristiques desdits objets (2) à mousser, dans lequel il est prévu :
- une première série de modules de transport (M_{T1}) agencés à la suite pour définir une première partie (T1) du trajet (P) et configurés pour faire avancer lesdites unités de moulage (4) en configuration ouverte le long de ladite première partie (T1), lesdits modules de transport (M_{T1}) définissant :
- une station (S_{X}) pour extraire les objets déjà moulés (2),
- une ou plusieurs stations (S_{P}) pour préparer/charger lesdites unités de moulage (4) pour les cycles de moussage ultérieurs d'autres objets (2) et
- une station (S_{E}) pour distribuer ledit mélange chimiquement réactif sur le premier élément de moulage (5A, 50A) de chaque unité de moulage (4) qui est en configuration ouverte,
et dans lequel il est prévu
- une seconde série de modules de transport (M_{T2}) agencés à la suite pour définir une seconde partie (T2) du trajet (P) et configurés pour l'avancement desdites unités de moulage (4) en configuration fermée le long de ladite seconde partie (T2) afin de permettre le processus de polymérisation et de stabilisation de forme desdits objets moussés (2) enserrés à l'intérieur des unités de moulage respectives (4),
**CARACTÉRISÉ EN CE QU'**IL comprend une unité de carrousel de fermeture-transfert-rotation (U_{CT}) configurée pour fermer et simultanément transférer par rotation lesdites unités de moulage (4) de ladite première partie (T1) du trajet (P) à ladite seconde partie (T2) du trajet (P), ladite unité de carrousel de fermeture-transfert-rotation (U_{CT}) comprenant une paire de dispositifs de déplacement diamétralement opposés (7), qui peuvent être entraînés en alternance de manière synchronisée avec l'arrivée en séquence desdites unités de moulage ouvertes (4) et configurés pour s'engager et s'accoupler à un second élément de moulage respectif (5B, 50B) avec le premier élément de moulage correspondant (5A, 50A) de manière à fermer l'unité de moulage respective (4) au cours d'une rotation de ladite unité de carrousel de fermeture-transfert (U_{CT}) et, à la fin de ladite rotation, la délivrer fermée à un module de transport (M_{T2}) de ladite seconde partie (T2), ET **EN CE QU'**IL comprend une unité de carrousel d'ouverture-transfert-rotation rotative (U_{AT}) configurée pour ouvrir et simultanément transférer par rotation lesdites unités de moulage (4) de ladite seconde partie (T2) du trajet, à la fin dudit processus de polymérisation et de stabilisation de forme, à ladite première partie (T1) du trajet (P), ladite unité de carrousel d'ouverture-transfert (U_{AT}) comprenant une paire d'autres dispositifs de déplacement diamétralement opposés (8), qui peuvent être entraînés en alternance de manière synchronisée avec l'arrivée en séquence desdites unités de moulage fermées (4) et configurés pour s'engager et se désaccoupler avec un second élément de moulage respectif (5B, 50B) du premier élément de moulage correspondant (5A, 50A) de manière à ouvrir l'unité de moulage respective (4) au cours d'une rotation de ladite unité de carrousel d'ouverture-retournement-transfert (U_{AT}) et, à la fin de ladite rotation, délivrer l'unité de moulage (4) à un module de transport (M_{T1}) de ladite première partie (T1) du trajet (P).

13. Appareil selon la revendication 12, dans lequel chacun desdits dispositifs de déplacement (7) de ladite unité de carrousel de fermeture-transfert-rotation (U_{CT}) et chacun desdits autres dispositifs de déplacement (8) de ladite unité de carrousel d'ouverture-transfert-rotation (U_{AT}) comprend deux unités coulissantes de saisie (16) montées à l'opposé à 180°, supportées et entraînables à coulissement verticalement sur un montant (17), respectivement, dudit carrousel de fermeture-transfert (U_{CT}) et dudit carrousel d'ouverture-transfert (U_{AT}), et dans lequel chaque unité coulissante de saisie (16) comprend des paires de moyens d'interception et de retrait rotatifs (10) configurés pour s'engager sur des côtés opposés sur une saillie périphérique (19) obtenue sur lesdits seconds éléments de moulage (5B, 50B) pour retenir l'écartement ou le rapprochement et le retournement de chaque second élément de moulage (5B, 50B) par rapport au premier élément de moulage correspondant (5A, 50B) pour ouvrir/fermer l'unité de moulage respective (4).

14. Appareil selon la revendication 12 ou 13, dans lequel ladite unité de carrousel d'ouverture-transfert (U_{AT}) et ladite unité de fermeture-transfert-rotation (U_{CT}) comprennent chacune deux plateformes (50) opposées à 180°, qui peuvent tourner autour d'un axe vertical respectif (V) et sont chacune pourvues d'un plan de support et d'avancement (51), lesdits plans étant mutuellement parallèles et agencés dans des positions diamétralement opposées qui conviennent pour recevoir commodément la rotation et l'avancement desdits premiers éléments de moulage (5A, 50A).

15. Appareil selon l'une quelconque des revendications 12 à 14, comprenant en outre une ou plusieurs têtes de mélange (38) configurées pour suivre et distribuer sur chaque premier élément de moulage avançant (5A, 50A) une quantité dudit mélange chimiquement réactif, lesdites une ou plus de têtes de mélange (38) étant supportées par des moyens coulissants (39) qui sont alternativement mobiles sur un guide le long d'une course opératoire (Y) qui s'étend près d'une partie aval de ladite première partie (T1) du trajet (P) pour autant qu'elle comprenne une zone située sur ladite unité de carrousel de fermeture-transfert (U_{CT}).

16. Appareil selon la revendication 15, dans lequel lesdites têtes de mélange (38) sont entraînées indépendamment l'une de l'autre et synchronisées pour déposer le mélange chimiquement réactif sur différentes zones de la même semi-cavité de moulage unique ménagée sur un premier élément de moulage (5A, 50B) ou pour déposer le mélange chimiquement réactif sur diverses semi-cavités de moulage respectives et séparées ménagées sur chaque premier élément de moulage (5A, 50A) et destinées à un moussage simultané d'un ensemble d'objets distincts (2).

17. Appareil selon l'une quelconque des revendications 12 à 16, dans lequel les modules de transport (M_{T1}) de ladite première partie (T1) de trajet (P) agencés pour extraire les objets déjà moulés (2), pour préparer lesdites unités de moulage (4) pour les cycles de moussage ultérieurs d'autres objets (2) et pour distribuer le mélange chimiquement réactif, comprennent des plans de repos et d'avancement inférieurs (22) définis par des moyens de roulement (27) pour supporter et faire avancer lesdits premiers éléments de moulage (5A) et des unités de retenue et d'avancement supérieures (21) pourvues de paires de moyens rotatifs (10) pour s'engager sur des saillies périphériques (19) desdits seconds éléments de moulage (5B, 50B) afin de retenir et de faire avancer ces derniers dans une direction parallèle et à une hauteur supérieure à celle desdits premiers éléments de moulage (5A, 50A) selon des plans inclinés et dans lequel lesdites unités de retenue et d'avancement supérieures (21) sont configurées pour incliner lesdits seconds éléments de moulage (5B, 50B) selon des plans inclinés (PI) de manière à orienter les seconds éléments de moulage (5B, 50B) vers un opérateur/robot pour faciliter leurs opérations d'extraction et de nettoyage et éventuellement pour charger des éléments de revêtement respectifs (3, 3').

18. Appareil selon l'une quelconque des revendications 12 à 17, comprenant une première (30) et une seconde (31) plateforme rotative agencées le long de ladite seconde partie (T2) du trajet (P), chacune étant pourvue d'une paire de plans de transport (32, 33) agencés dans des positions diamétralement opposées, qui conviennent pour recevoir et modifier le sens d'avancement desdites unités de moulage (4) par rotation indexée de 180°, respectivement, de ladite première (30) et de ladite seconde (31) plateforme rotative.

19. Appareil selon l'une quelconque des revendications 12 à 18, dans lequel les modules de transport (M_{T2}) de ladite seconde partie (T2) du trajet (P) comprennent des premiers moyens de roulement inférieurs (27) et des seconds moyens de roulement supérieurs (28) pour bloquer et transporter lesdites unités de moulage (4) le long dudit trajet (P), lesdits premiers moyens de roulement (27) et lesdits seconds moyens de roulement (28) étant positionnables à une distance de fonctionnement mutuelle souhaitée (D) pour définir, le long dudit trajet d'avancement (P), un intervalle (I) pour l'avancement et le blocage desdites unités de moulage (4), lesdits premiers moyens de roulement (27) et lesdits seconds moyens de roulement (28) étant configurés pour exercer sur chaque unité de moulage (4), sur des côtés opposés, des actions de pression opposées uniformément distribuées (P1, P2) de manière à maintenir mutuellement fermés et bloqués les premiers (5A, 50A) et seconds (5B, 50B) éléments de moulage respectifs et s'opposer aux poussées exercées par la mousse en expansion.

20. Appareil selon l'une quelconque des revendications 12 à 19, comprenant une chambre de chauffage (11) qui enserre un ou plusieurs modules de transport pour chauffer chaque unité de moulage (4) et promouvoir le processus de moussage.

21. Appareil selon la revendication 15 ou selon l'une quelconque des revendications 16 à 20 dans la mesure où elles dépendent de la revendication 15, comprenant en outre une unité de commande (40) raccordée au plan opérationnel à tous les modules de transport (M_{T1}, M_{T2}), à ladite unité de carrousel d'ouverture-transfert (U_{AT}), à ladite unité de carrousel de fermeture-transfert (U_{CT}) et à ladite une ou plus de têtes de mélange (38), pour déplacer par étapes ou en continu lesdites unités de moulage (4) à différentes vitesses d'avancement d'une zone à l'autre dudit trajet d'avancement (P) sur la base des périodes requises pour les opérations de chargement/déchargement et des périodes requises pour compléter la réaction de moussage et la stabilisation de forme des objets moulés (2).

22. Appareil selon l'une quelconque des revendications 12 à 21, comprenant en outre une station de changement de moule (S_{CS}) qui convient pour remplacer une ou plusieurs unités de moulage (4) par d'autres unités de moulage différentes (4) pour mousser « juste à temps » des objets tels que des portes pour réfrigérateurs, avec des géométries variables.
